# EUROPEAN PATENT APPLICATION

(11) **EP 4 700 535 A1**
(43) Date of publication of application: **25.02.2026**
(21) Application number: 25719947.1
(22) Date of filing: 16.04.2025
(51) Int. Cl.: G06F 1/16, C03C 17/30, C03C 17/32, B32B 17/10

(54) **ELECTRONIC DEVICE COMPRISING SUPPORT STRUCTURE FOR REINFORCING FLEXIBLE DISPLAY**

(30) Priority: 05.07.2024 KR 20240089290; 06.09.2024 KR 20240121918
(71) Applicant: Samsung Electronics Co., Ltd, Suwon-si, Gyeonggi-do 16677 (KR)
(72) Inventor: JUNG, Bowon, Suwon-si, Gyeonggi-do 16677 (KR); RYU, Bummoo, Suwon-si, Gyeonggi-do 16677 (KR); PARK, Soonik, Suwon-si, Gyeonggi-do 16677 (KR); YANG, Byungduk, Suwon-si, Gyeonggi-do 16677 (KR); YOON, Chungki, Suwon-si, Gyeonggi-do 16677 (KR); CHUNG, Seungsoo, Suwon-si, Gyeonggi-do 16677 (KR); CHOUNG, Taedoo, Suwon-si, Gyeonggi-do 16677 (KR); CHOI, Seongdae, Suwon-si, Gyeonggi-do 16677 (KR); KIM, Kwangtai, Suwon-si, Gyeonggi-do 16677 (KR)
(74) Representative: Gulde & Partner
(86) International application number: PCT/KR2025/005205
(87) International publication number: WO 2026/010093

(57) **Abstract**

According to an embodiment, a foldable electronic device includes a flexible display including a first portion, a second portion, and a third portion extending from the first portion to the second display portion, which is foldable. The foldable electronic device includes a support plate, formed from glass, supporting the flexible display, and including a first supporting portion disposed under the first portion, a second supporting portion disposed under the second portion, and a third supporting portion disposed under the third portion and including a plurality of slits. The foldable electronic device includes a protection layer attached under the support plate.

## Description

### [Technical Field]

The present disclosure relates to an electronic device including a structure for reinforcing a flexible display.

### [Background Art]

As a demand of a user is diversified, an electronic device may include a structure in which a display for displaying content is deformable. For example, the electronic device may include a foldable flexible display. The electronic device may require a support structure of a display for reinforcing a deformable display.

The above-described information may be provided as a related art for the purpose of helping understanding of the present disclosure. No argument or decision is made as to whether any of the above description may be applied as a prior art related to the present disclosure.

### [Disclosure]

### [Technical Solution]

A foldable electronic device is disclosed. The foldable electronic device comprises a flexible display including a first portion, a second portion, and a third portion extending from the first portion to the second display portion, which is foldable. The foldable electronic device comprises a support plate, formed from glass, supporting the flexible display, and including a first supporting portion disposed under the first portion, a second supporting portion disposed under the second portion, and a third supporting portion disposed under the third portion and including a plurality of slits. The foldable electronic device comprises a protection layer attached under the support plate. In an embodiment, the protection layer may be coated under the support plate.

A foldable electronic device is disclosed. The foldable electronic device may comprise a housing including a first housing part and a second housing part. The foldable electronic device may comprise a hinge assembly that rotatably couples the first housing part and the second housing part. The foldable electronic device may comprise a flexible display including a first portion coupled to the first housing part, a second portion coupled to the second housing part, and a third portion extending from the first portion to the second portion and foldable by the hinge assembly. The foldable electronic device may comprise a support plate, formed from glass, supporting the flexible display, and including a first supporting portion disposed under the first portion, a second supporting portion disposed under the second portion, and a third supporting portion disposed under the third portion and including a plurality of slits. The foldable electronic device comprises a protection layer attached under the support plate. In an embodiment, the protection layer may be coated under the support plate. A neutral plane of the support plate may be disposed adjacent to a second surface among a first surface facing toward the flexible display and the second surface opposite to the first surface.

### [Description of the Drawings]

FIG. 1 is a block diagram of an electronic device in a network environment according to various embodiments.
FIG. 2A illustrates an unfolded state of an exemplary electronic device.
FIG. 2B illustrates a folded state of an exemplary electronic device.
FIG. 2C is an exploded view of an exemplary electronic device.
FIG. 3A illustrates an unfolded state of an exemplary electronic device.
FIG. 3B illustrates a folded state of an exemplary electronic device.
FIG. 4 is a cross-sectional view of an exemplary electronic device cut along line A-A' of FIG. 2A or cut along line B-B' of FIG. 3A.
FIG. 5A illustrates a support plate of an exemplary electronic device.
FIG. 5B illustrates a support plate to which a protection layer of an exemplary electronic device is attached.
FIG. 5C illustrates a portion of an exemplary electronic device.
FIGS. 5D and 5E illustrate a support plate to which a protection layer of an exemplary electronic device is attached.
FIGS. 6A, 6B, 6C, 6D, and 6E illustrate a support plate to which a protection layer of an exemplary electronic device is attached.
FIG. 7A illustrates a portion of an exemplary electronic device in a folded state.
FIG. 7B illustrates a portion of a support plate of an exemplary electronic device.
FIGS. 8A, 8B, 8C, 8D, 8E, and 8F illustrate a portion of a support plate of an exemplary electronic device.
FIG. 9A illustrates an exemplary electronic device in a first state.
FIG. 9B illustrates an exemplary electronic device in a second state.
FIG. 9C is a top plan view of an exemplary electronic device in a first state from which a flexible display is removed.
FIG. 9D is a rear view of an exemplary electronic device in a first state from which a rear cover is removed.

### [Mode for Invention]

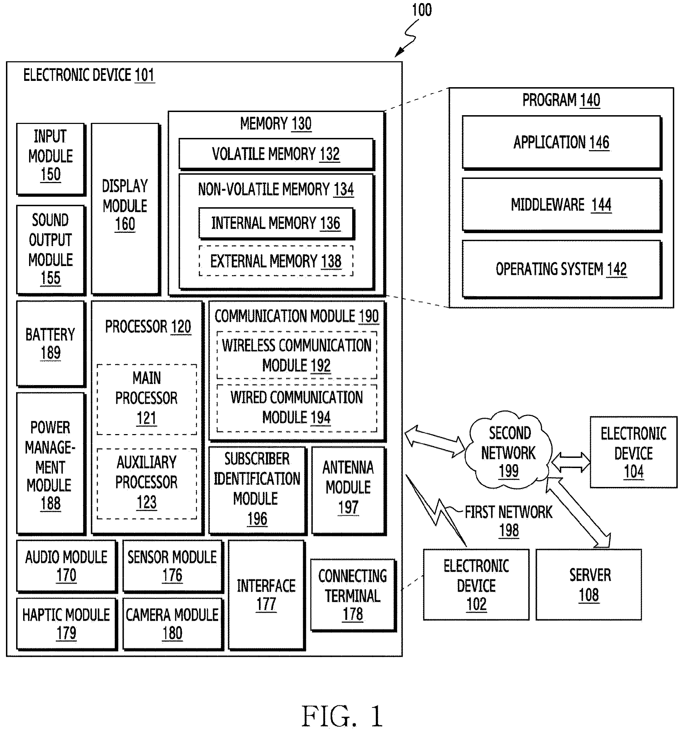

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

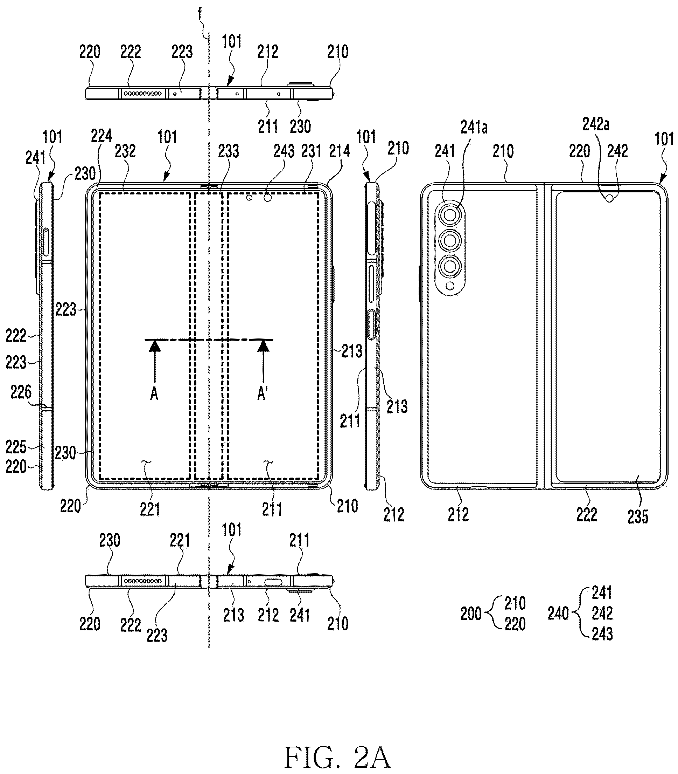

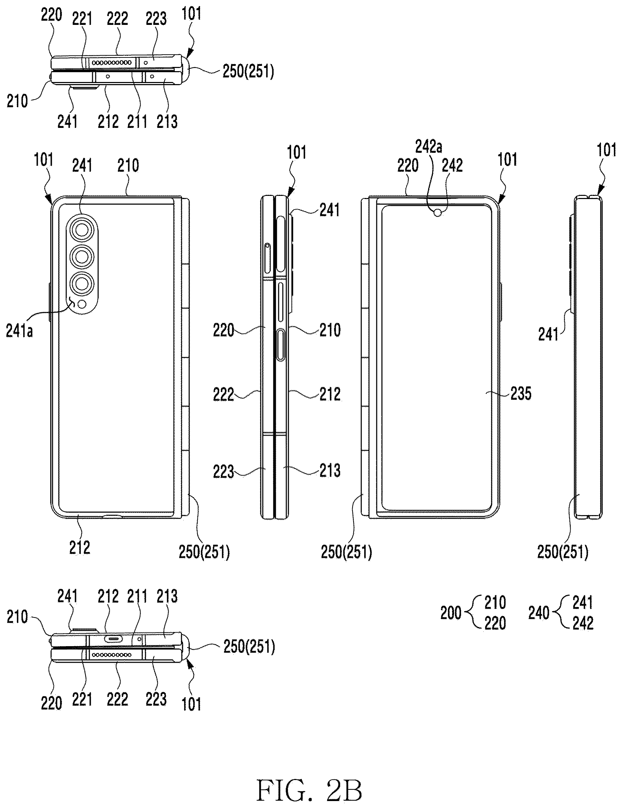

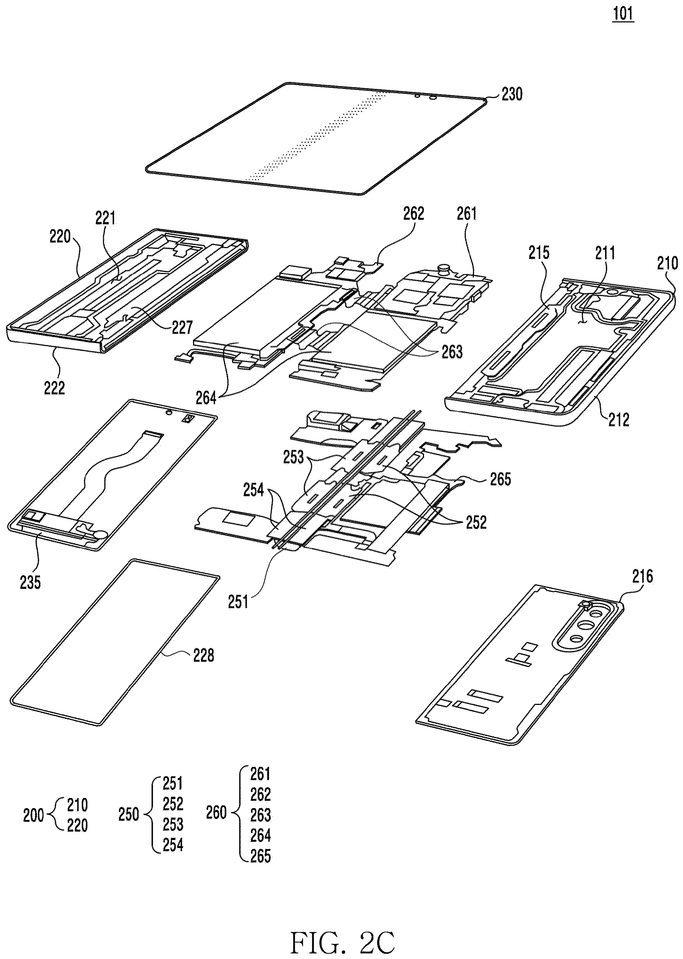

FIG. 2A illustrates an unfolded state of an exemplary electronic device. FIG. 2B illustrates a folded state of an exemplary electronic device. FIG. 2C is an exploded view of an exemplary electronic device.

Referring to FIGS. 2A, 2B, and 2C, an electronic device 101 may include a housing 200 including a first housing part 210 and a second housing part 220, a display 230, at least one camera 240 (e.g., the camera module 180 of FIG. 1), a hinge structure 250, and/or at least one electronic component 260.

The first housing part 210 and the second housing part 220 may form at least a portion of an outer surface of the electronic device 101 that may be gripped by a user. At least a portion of the outer surface of the electronic device 101 defined by the first housing part 210 and the second housing part 220 may contact a portion of a body of the user when the electronic device 101 is used by the user. According to an embodiment, the first housing part 210 may include a first front surface 211, a first rear surface 212 facing the first front surface 211 and spaced apart from the first front surface 211, and first side surfaces 213 surrounding at least a portion of the first front surface 211 and the first rear surface 212. The first side surfaces 213 may connect a periphery of the first front surface 211 to a periphery of the first rear surface 212. The first front surface 211, the first rear surface 212, and the first side surfaces 213 may define an inner space of the first housing part 210. According to an embodiment, the first housing part 210 may provide a space formed by the first front surface 211, the first rear surface 212, and the first side surfaces 213 as a space for disposing components of the electronic device 101.

The second housing part 220 may include a second front surface 221, a second rear surface 222 facing the second front surface 221 and spaced apart from the second front surface 221, and second side surfaces 223 surrounding at least a portion of the second front surface 221 and the second rear surface 222. The second side surfaces 223 may connect a periphery of the second front surface 221 to a periphery of the second rear surface 222. The second front surface 221, the second rear surface 222, and the second side surfaces 223 may define an inner space of the second housing part 220. According to an embodiment, the second housing part 220 may provide a space formed by the second front surface 221, the second rear surface 222, and the second side surfaces 223 surrounding at least a portion of the second front surface 221 and the second rear surface 222 as a space for mounting components of the electronic device 101. According to an embodiment, the second housing part 220 may be coupled to the first housing part 210 to be rotatable with respect to the first housing part 210.

Each of the first housing part 210 and the second housing part 220 may include a first protection member 214 and a second protection member 224, respectively. The first protection member 214 and the second protection member 224 may be disposed on the first front surface 211 and the second front surface 221 along a periphery of the display 230. According to an embodiment, the first protection member 214 and the second protection member 224 may prevent an inflow of a foreign matter (e.g., dust or moisture) through a gap between the display 230 and the first housing part 210 and the second housing part 220. For example, the first protection member 214 may surround a periphery of a first display portion 231 of the display 230, and the second protection member 224 may surround a periphery of a second display portion 232 of the display 230. The first protection member 214 may be formed by being attached to the first side surfaces 213 of the first housing part 210, or may be formed integrally with the first side surfaces 213. The second protection member 224 may be formed by being attached to the second side surfaces 223 of the second housing part 220, or may be formed integrally with the second side surfaces 223.

The first side surfaces 213 and the second side surfaces 223 may include a conductive material, a non-conductive material, or a combination thereof. For example, the second side surfaces 223 may include at least one conductive portion 225 and at least one non-conductive portion 226. The at least one conductive portion 225 may include a plurality of conductive portions spaced apart from each other. The at least one non-conductive portion 226 may be disposed between the plurality of conductive portions. The plurality of conductive portions may be disconnected from each other by the at least one non-conductive portion 226 disposed between the plurality of conductive portions. According to an embodiment, the plurality of conductive portions and a plurality of non-conductive portions may form an antenna radiator together. The electronic device 101 may communicate with an external electronic device through the antenna radiator formed by the plurality of conductive portions and the plurality of non-conductive portions.

The display 230 may be configured to display visual information. According to an embodiment, the display 230 may be disposed on the first front surface 211 of the first housing part 210 and the second front surface 221 of the second housing part 220 across the hinge structure 250. For example, the display 230 may include the first display portion 231 disposed on the first front surface 211 of the first housing, the second display portion 232 disposed on the second front surface 221 of the second housing, and a third display portion 233 disposed between the first display portion 231 and the second display portion 232. The first display portion 231, the second display portion 232, and the third display portion 233 may form a front surface of the display 230. According to an embodiment, the display 230 may further include a sub-display 235 disposed on the second rear surface 222 of the second housing part 220. For example, the display 230 may be referred to as a flexible display. According to an embodiment, the display 230 may include a window exposed toward the outside of the electronic device 101. The window may protect a surface of the display 230 and transmit, by including a substantially transparent material, the visual information provided by the display 230 to the outside of the electronic device 101. For example, the window may include glass (e.g., ultra-thin glass (UTG)) and/or polymer (e.g., polyimide (PI)), but is not limited thereto.

At least one camera 240 may be configured to obtain an image based on receiving light from an external subject of the electronic device 101. According to an embodiment, the at least one camera 240 may include first cameras 241, a second camera 242, and/or a third camera 243. The first cameras 241 may be disposed in the first housing part 210. For example, the first cameras 241 may be disposed inside the first housing part 210, and at least a portion may be visible through the first rear surface 212 of the first housing part 210. The first cameras 241 may be supported by a bracket (not illustrated) in the first housing part 210. The first housing part 210 may include at least one opening 241a overlapping the first cameras 241 when the first rear surface 212 is viewed from above. The first cameras 241 may obtain an image based on receiving light from the outside of the electronic device 101 through the at least one opening 241a.

The second camera 242 may be disposed in the second housing part 220. For example, the second camera 242 may be disposed inside the second housing part 220 and may be visible through the sub-display 235. The second housing part 220 may include at least one opening 242a overlapping the second camera 242 when the second rear surface 222 is viewed from above. The second camera 242 may obtain an image based on receiving light from the outside of the electronic device 101 through the at least one opening 242a.

The third camera 243 may be disposed in the first housing part 210. For example, the third camera 243 may be disposed inside the first housing part 210, and at least a portion may be visible through the first front surface 211 of the first housing part 210. For another example, the third camera 243 may be disposed inside the first housing part 210, and at least a portion may be visible through the first display portion 231 of the display 230. The first display portion 231 of the display 230 may include at least one opening (not illustrated) overlapping the third camera 243 when the display 230 is viewed from above. The third camera 243 may obtain an image based on receiving light from the outside of the display 230 through the at least one opening.

The second camera 242 and the third camera 243 may be disposed under (e.g., a direction toward the inside of the first housing part 210 or the inside of the second housing part 220) the display 230. For example, the second camera 242 and the third camera 243 may be an under display camera (UDC). In case that the second camera 242 and the third camera 243 are the under display camera, an area of the display 230 corresponding to a position of each of the second camera 242 and the third camera 243 may not be an inactive area. For example, in case that the second camera 242 and the third camera 243 are the under display camera, an area of the display 230 corresponding to the position of each of the second camera 242 and the third camera 243 may have pixel density lower than pixel density of another area of the display 230. The inactive area of the display 230 may mean an area of the display 230 that does not include a pixel or does not emit light to the outside of the electronic device 101. For another example, the second camera 242 and the third camera 243 may be a punch hole camera. In case that the second camera 242 and the third camera 243 are the punch hole camera, the area of the display 230 corresponding to the position of each of the second camera 242 and the third camera 243 may be the inactive area. For example, in case that the second camera 242 and the third camera 243 are the punch hole camera, the area of the display 230 corresponding to the position of each of the second camera 242 and the third camera 243 may include an opening that does not include a pixel.

The hinge structure 250 may rotatably connect the first housing part 210 and the second housing part 220. The hinge structure 250 may be disposed between the first housing part 210 and the second housing part 220 of the electronic device 101 so that the electronic device 101 may be bent, curved, or folded. For example, the hinge structure 250 may be disposed between a portion of the first side surfaces 213 and a portion of the second side surfaces 223 facing each other. The hinge structure 250 may change the electronic device 101 into an unfolded state in which the first front surface 211 of the first housing part 210 and the second front surface 221 of the second housing part 220 face substantially the same direction as each other, or a folded state in which the first front surface 211 and the second front surface 221 face each other. When the electronic device 101 is in the folded state, the first housing part 210 and the second housing part 220 may be stacked or overlapped by facing each other.

When the electronic device 101 is in the folded state, a direction in which the first front surface 211 faces and a direction in which the second front surface 221 faces may be different from each other. For example, when the electronic device 101 is in the folded state, the direction in which the first front surface 211 faces and the direction in which the second front surface 221 faces may be opposite to each other. For another example, when the electronic device 101 is in the folded state, the direction in which the first front surface 211 faces and the direction in which the second front surface 221 faces may be inclined with respect to each other. When the direction in which the first front surface 211 faces is inclined with respect to the direction in which the second front surface 221 faces, the first housing part 210 may be inclined with respect to the second housing part 220. However, it is not limited thereto. For example, in the folded state of the electronic device 101, the first rear surface 212 of the first housing part 210 may face the second rear surface 222 of the second housing part 220. In case that the first rear surface 212 and the second rear surface 222 face each other in the folded state of the electronic device 101, the direction in which the first front surface 211 faces and the direction in which the second front surface 221 faces may be opposite to each other. In case that the first rear surface 212 and the second rear surface 222 face each other in the folded state of the electronic device 101, the display 230 may be directly exposed to the outside in the folded state of the electronic device 101.

The electronic device 101 may be foldable with respect to a folding axis f. The folding axis f may mean a virtual line extending through the hinge cover 251 in a direction substantially parallel to a longitudinal direction of the electronic device 101, but is not limited thereto. For example, the folding axis f may be a virtual line extending in a direction substantially perpendicular to the longitudinal direction of the electronic device 101. In case that the folding axis f extends in the direction substantially perpendicular to the longitudinal direction of the electronic device 101, the hinge structure 250 may connect the first housing part 210 and the second housing part 220 by extending in a direction parallel to the folding axis f. The first housing part 210 and the second housing part 220 may be rotatable by the hinge structure 250 extending in the direction substantially perpendicular to the longitudinal direction of the electronic device 101.

The hinge structure 250 may include a hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 101 is in the folded state, at least a portion of the hinge cover 251 surrounding the hinge structure 250 may be visually exposed to the outside of the electronic device 101 through a space between the first housing part 210 and the second housing part 220. According to an embodiment, when the electronic device 101 is in the unfolded state, the hinge cover 251 may not be visually exposed to the outside of the electronic device 101 by being covered by the first housing part 210 and the second housing part 220.

The first hinge plate 252 and the second hinge plate 253 may rotatably connect the first housing part 210 and the second housing part 220 by being coupled to the first housing part 210 and the second housing part 220, respectively. For example, the first hinge plate 252 may be coupled with a first bracket 215 of the first housing part 210, and the second hinge plate 253 may be coupled with a second bracket 227 of the second housing part 220. As the first hinge plate 252 and the second hinge plate 253 are coupled to the first bracket 215 and the second bracket 227, respectively, the first housing part 210 and the second housing part 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears that are rotatable by being engaged with each other. According to an embodiment, the hinge module 254 may be plural or may include a plurality of components. For example, the plurality of hinge modules 254 may be disposed to be spaced apart from each other at both ends of the first hinge plate 252 and the second hinge plate 253, respectively.

The first housing part 210 may include the first bracket 215 and a first cover 216, and the second housing part 220 may include the second bracket 227 and a second cover 228. The first bracket 215 and the first cover 216 may support components of the electronic device 101. The first bracket 215 may define the first housing part 210 by being coupled to the first cover 216. The first cover 216 may define a portion of an outer surface of the first housing part 210. The second bracket 227 and the second cover 228 may support components of the electronic device 101. The second bracket 227 may define the second housing part 220, by being coupled to the second cover 228. The second cover 228 may define a portion of an outer surface of the second housing part 220. For example, the display 230 may be disposed on a surface of the first bracket 215 and a surface of the second bracket 227. The first cover 216 may be disposed on another surface of the first bracket 215 opposite to the surface of the first bracket 215. The second cover 228 may be disposed on another surface of the second bracket 227 opposite to the surface of the second bracket 227. The sub-display 235 may be disposed between the second bracket 227 and the second cover 228.

A portion of the first bracket 215 may be surrounded by the first side surfaces 213, and a portion of the second bracket 227 may be surrounded by the second side surfaces 223. For example, the first bracket 215 may be integrally formed with the first side surfaces 213, and the second bracket 227 may be integrally formed with the second side surfaces 223. For another example, the first bracket 215 may be formed separately from the first side surfaces 213, and the second bracket 227 may be formed separately from the second side surfaces 223.

The at least one electronic component 260 may implement various functions to be provided to the user. According to an embodiment, the at least one electronic component 260 may include a first printed circuit board 261, a second printed circuit board 262, a flexible printed circuit board 263, a battery 264 (e.g., the battery 189 of FIG. 1), and/or an antenna 265 (e.g., the antenna module 197 of FIG. 1). The first printed circuit board 261 and the second printed circuit board 262 may each form an electrical connection between components in the electronic device 101. For example, components (e.g., the processor 120 of FIG. 1) for implementing an overall function of the electronic device 101 may be disposed in the first printed circuit board 261, and at least one electronic component for implementing some functions of the first printed circuit board 261 may be disposed in the second printed circuit board 262. For another example, components for an operation of the sub-display 235 disposed on the second rear surface 222 may be disposed in the second printed circuit board 262.

The first printed circuit board 261 may be disposed in the first housing part 210. For example, the first printed circuit board 261 may be disposed on a surface of the first bracket 215. According to an embodiment, the second printed circuit board 262 may be disposed in the second housing part 220. For example, the second printed circuit board 262 may be spaced apart from the first printed circuit board 261 and disposed on a surface of the second bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264 is a device for supplying power to at least one component of the electronic device 101, and may include, for example, a non-rechargeable primary battery, a rechargeable secondary battery, or a fuel cell. At least a portion of the battery 264 may be disposed on substantially the same plane as the first printed circuit board 261 or the second printed circuit board 262.

The antenna 265 may be configured to receive power or a signal from the outside of the electronic device 101. According to an embodiment, the antenna 265 may be disposed between the first cover 216 and the battery 264. The antenna 265 may include, for example, a near field communication (NFC) antenna, an antenna module, and/or a magnetic secure transmission (MST) antenna. The antenna 265 may, for example, perform short-range communication with an external device or wirelessly transmit and receive power required for charging.

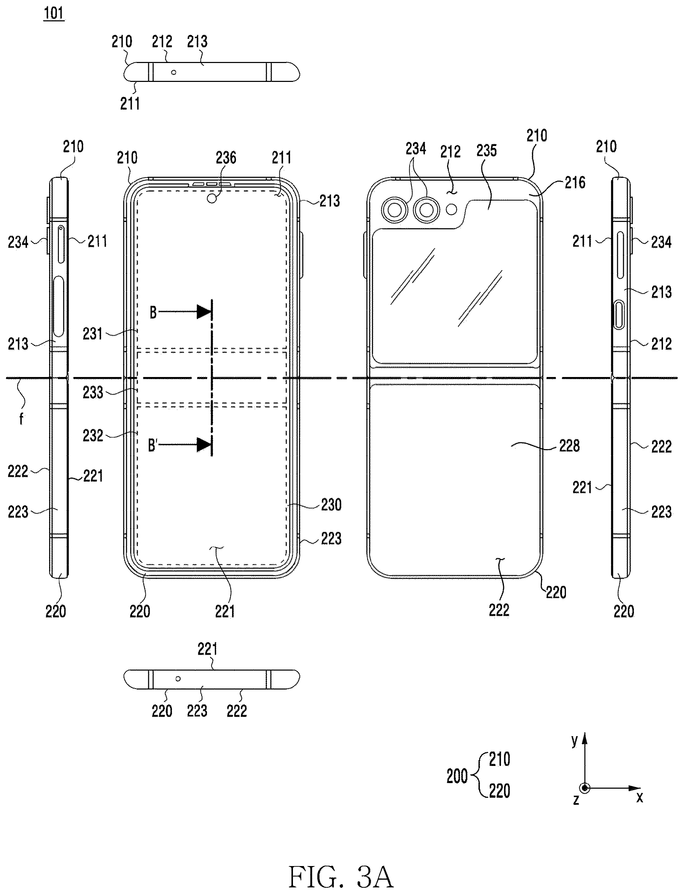

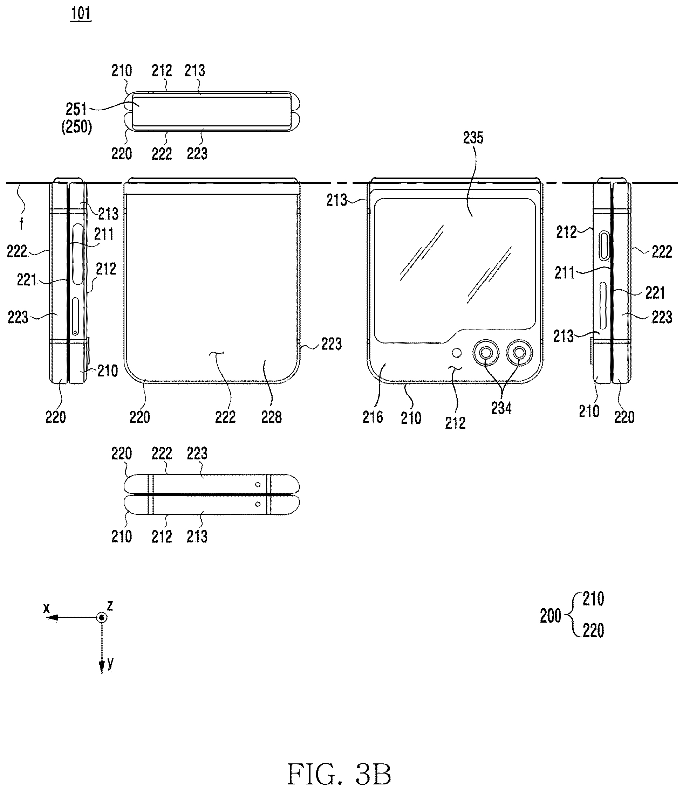

FIG. 3A illustrates an unfolded state of an exemplary electronic device. FIG. 3B illustrates a folded state of an exemplary electronic device.

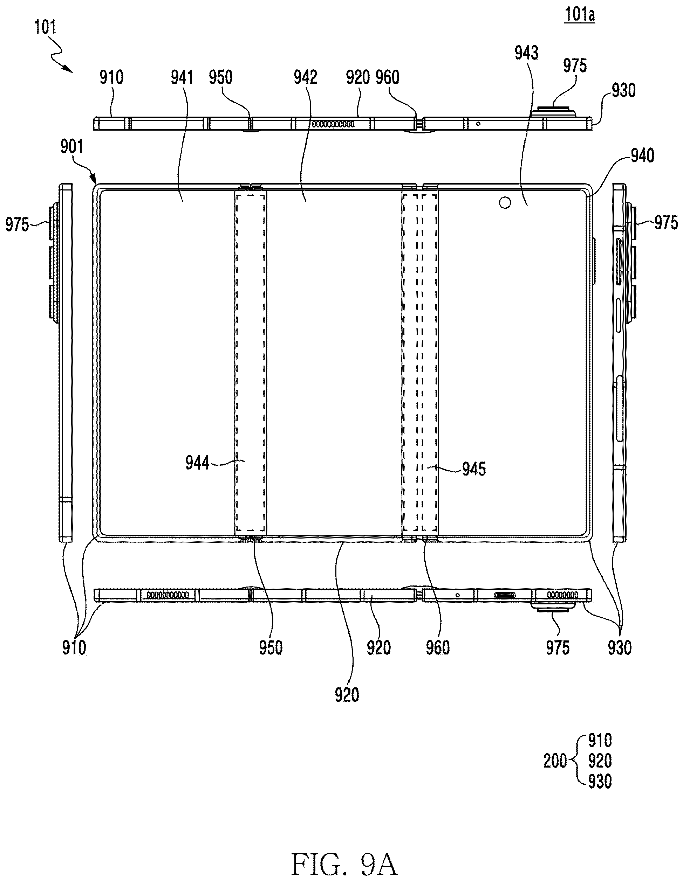

An electronic device 101 exemplarily illustrated and described in FIGS. 3A and 3B may include a housing 200 including a first housing part 210 and a second housing part 220 rotatable with respect to the first housing part 210, such as the electronic device 101 exemplarily illustrated and described in FIGS. 2A to 2C. The electronic device 101 exemplarily illustrated and described in FIGS. 3A and 3B may be referred to as a foldable electronic device in terms of including a display 230 including a third display portion 233 (or a foldable portion 233) that is deformable by a hinge structure 250 (or a hinge assembly) configured to rotate the second housing part 220 with respect to the first housing part 210, such as the electronic device 101 exemplarily illustrated and described in FIGS. 2A to 2C. For example, a folding axis f of the electronic device 101 exemplarily illustrated and described in FIGS. 3A and 3B may be parallel to an x-axis, as illustrated. The folding axis f of the electronic device 101 exemplarily illustrated and described in FIGS. 2A to 2C may be parallel to a y-axis, which is orthogonal to the x-axis, unlike the electronic device 101 exemplarily illustrated and described in FIGS. 3A and 3B. However, the electronic device 101 illustrated and described in FIGS. 2A to 3B is exemplary, and the electronic device 101 may have various foldable form factors (e.g., a multi-foldable electronic device exemplarily illustrated in FIGS. 9A to 9D). Hereinafter, the electronic device 101 exemplarily illustrated in FIGS. 3A and 3B will be described with reference to the description of configurations having the same reference numerals in FIGS. 2A to 2C.

The electronic device 101 may include the housing 200 including the first housing part 210 and the second housing part 220, and the hinge structure (or the hinge assembly) 250. The first housing part 210 may be rotatably connected to the hinge structure 250. The first housing part 210 may rotate with respect to the second housing part 220 through the hinge structure 250. The second housing part 220 may be rotatably connected to the hinge structure 250. The second housing part 220 may rotate with respect to the first housing part 210 through the hinge structure 250.

The first housing part 210 may include a first front surface 211, a first rear surface 212 faced away from the first front surface 211, and first side surfaces 213 surrounding at least a portion of the first front surface 211 and the first rear surface 212. The first housing part 210 may provide a space for disposing components of the electronic device 101. The first housing part 210 may include a conductive material, a non-conductive material, or a combination thereof.

The second housing part 220 may include a second front surface 221, a second rear surface 222 faced away from the second front surface 221, and second side surfaces 223 surrounding at least a portion of the second front surface 221 and the second rear surface 222. The second housing part 220 may provide a space for disposing components of the electronic device 101.

The hinge structure 250 may be connected to the first housing part 210 and the second housing part 220, respectively. For example, the hinge structure 250 may include a first hinge plate (e.g., the first hinge plate 252 of FIG. 2C) and a second hinge plate (e.g., the second hinge plate 253 of FIG. 2C) configured to be rotatable. The first hinge plate may be connected to the first housing part 210, and the first housing part 210 may be rotated by the first hinge plate. The second hinge plate may be connected to the second housing part 220, and the second housing part 220 may be rotated by the second hinge plate.

According to the rotation of the first housing part 210 and the second housing part 220, the electronic device 101 may be folded or unfolded based on the folding axis f passing through the hinge structure 250. The hinge structure 250 may be positioned between the first housing part 210 and the second housing part 220 so that the electronic device 101 may be folded with respect to the folding axis f.

The hinge structure 250 may include a hinge cover 251 for covering an internal structure that configures a mechanism of the hinge structure. The hinge cover 251 may be visually exposed to the outside according to a degree to which the electronic device 101 is folded, or may be covered by the first housing part 210 and the second housing part 220. For example, while the electronic device 101 is in a folded state (e.g., FIG. 3B), the hinge cover 251 may be at least partially exposed through a space between the first housing part 210 and the second housing part 220. For example, while the electronic device 101 is in an unfolded state (e.g., FIG. 3A), the hinge cover 251 may be covered by the first housing part 210 and the second housing part 220.

The electronic device 101 may include the display 230 (e.g., the display module 160 of FIG. 1) disposed in a space provided by the first housing part 210 and the second housing part 220. For example, the display 230 may be at least partially accommodated in a recess formed on the first front surface 211 of the first housing part 210 and the second front surface 221 of the second housing part 220. The display 230 may include a first display portion 231 aligned with respect to the first housing part 210, a second display portion 232 spaced apart from the first display portion 231 and aligned with respect to the second housing part 220, and a third display portion 233 aligned with respect to the hinge structure 250 and extending from the first display portion 231 to the second display portion 232. The display 230 may be referred to as a foldable display or a flexible display. The first display portion 231, the second display portion 232, and the third display portion 233 may form a surface of the display 230. The surface of the display 230 may at least partially form the first front surface 211 of the first housing part 210 and the second front surface 221 of the second housing part 220. The first display portion 231, the second display portion 232, and the third display portion 233 may define a first display area, a second display area, and a third display area of the display 230, respectively, in which visual information may be displayed.

The electronic device 101 may include a sub-display 235 (e.g., the display module 160 of FIG. 1) disposed in the first housing part 210. The sub-display 235 may be viewed through the second rear surface 222 of the second housing part 220.

The electronic device 101 may include a plurality of cameras (e.g., the camera module 180 of FIG. 1). For example, the electronic device 101 may include cameras 234 and 236. The camera 234 may be disposed in the first housing part 210 to obtain an image through a portion of the first rear surface 212. The camera 236 may be disposed under the first display portion 231 of the display 230. The camera 236 may be aligned to an opening at least partially penetrating the first display portion 231, and may obtain an image through the hole. The camera 236 may be positioned in a screen display area of the display 230, but is not limited thereto.

Hereinafter, states of the electronic device 101 will be described. The electronic device 101 may include a plurality of states including the unfolded state (e.g., FIG. 3A) and the folded state (e.g., FIG. 3B). The electronic device 101 may be transformed or changed in the unfolded state and the folded state. In addition, the electronic device 101 may include a plurality of intermediate states between the unfolded state and the folded state. An angle between the first housing part 210 and the second housing part 220 may vary according to a state of the electronic device 101.

Referring to FIG. 3A, in the unfolded state, the first housing part 210 and the second housing part 220 may form a first angle. For example, the first angle may be approximately 180 degrees. The first display portion 231, the second display portion 232, and the third display portion 233 of the display 230 may form one substantially planar surface. A direction (e.g., a +z direction) in which the first front surface 211 (or the first display portion 231) of the first housing part 210 faces and a direction (e.g., the +z direction) in which the second front surface 221 (or the second display portion 232) of the second housing part 220 faces may be substantially the same.

Referring to FIG. 3B, in the unfolded state of the electronic device 101, the first housing part 210 and the second housing part 220 may be folded to face each other by rotating based on the folding axis f. The first housing part 210 and the second housing part 220 may be stacked on each other to form a second angle smaller than the first angle. For example, the second angle may be approximately 0 degrees. The third display portion 233 of the display 230 may be bent to correspond to the second angle. The first front surface 211 of the first housing part 210 may face the second front surface 221 of the second housing part 220 or may overlap the second front surface 221. The first housing part 210 and the second housing part 220 may at least partially contact each other, but are not limited thereto. The direction (e.g., the +z direction) in which the first front surface 211 of the first housing part 210 faces and the direction (e.g., a -z direction) in which the second front surface 221 of the second housing part 220 faces may be opposite to each other. In the unfolded state, at least a portion of the display 230 may not be visible from outside the electronic device 101, and the sub-display 235 may be visible from outside the electronic device 101.

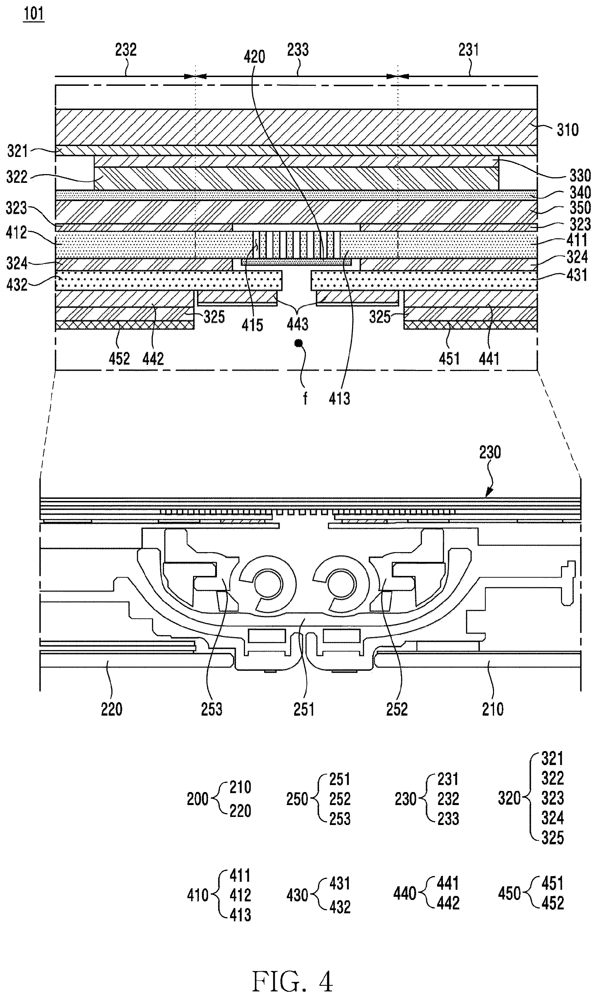

FIG. 4 is a cross-sectional view of an exemplary electronic device cut along line A-A' of FIG. 2A or cut along line B-B' of FIG. 3A.

Referring to FIG. 4, an electronic device 101 may include a housing 200 including a first housing part 210 and a second housing part 220, a display 230, a hinge structure 250, and a support plate 410.

The display 230 may include a first display portion 231, a second display portion 232 spaced apart from the first display portion 231, and a third display portion 233 that connects the first display portion 231 and the second display portion 232 and is foldable.

An unfolded state of the electronic device 101 may be a state in which the first display portion 231 and the second display portion 232 of the display 230 face the same direction (e.g., a +z direction). For example, the housing 200 may include a first front surface (e.g., the first front surface 211 of FIG. 2A) on which the first display portion 231 is disposed and a second front surface (e.g., the second front surface 221 of FIG. 2A) on which the second display portion 232 is disposed. The unfolded state may be a state in which the first front surface 211 and the second front surface 221 face substantially the same direction. For example, the unfolded state may be a state in which the display 230 is unfolded. The unfolded state may be a state in which the first display portion 231, the second display portion 232, and the third display portion 233 of the display 230 substantially form a plane.

A folded state of the electronic device 101 may be a state in which the first display portion 231 and the second display portion 232 of the display 230 face each other. For example, the folded state may be a state in which a direction (e.g., a -x direction) in which the first display portion 231 faces is opposite to a direction (e.g., a +x direction) in which the second display portion 232 faces. For example, the folded state may be a state in which a direction in which the first front surface 211 on which the first display portion 231 is disposed faces and a direction in which the second front surface 221 on which the second display portion 232 is disposed faces are opposite. For example, the folded state may be a state in which the first display portion 231 and the second display portion 232 contact each other as the third display portion 233 is folded.

For example, in the unfolded state of the electronic device 101, the first display portion 231 may face substantially the same direction (e.g., the +z direction) as the second display portion 232. For example, the first display portion 231 may face the second display portion 232 in the folded state of the electronic device 101. For example, the first display portion 231 may contact the second display portion 232 in the folded state. For example, the first display portion 231 and the second display portion 232 may substantially form a plane in the unfolded state of the electronic device 101 and the folded state of the electronic device 101. For example, the first display portion 231 and the second display portion 232 may be non-deformable portions of the display 230.

For example, the third display portion 233 may extend from the first display portion 231 to the second display portion 232. For example, the third display portion 233 may be disposed between the first display portion 231 and the second display portion 232. For example, the third display portion 233 may be configured to rotate the second display portion 232 with respect to the first display portion 231 by being transformed.

The display 230 may be referred to as a display stack or a display structure in which a plurality of layers are coupled.

For example, the display 230 may include a window 310 (or cover glass), which is an upper-most layer visually exposed to the outside of the electronic device 101. The window 310 may be at least partially deformable or may include one or more curved portions. For example, the window 310 may include a stacked structure of a plurality of windows, but an embodiment supported by the present disclosure is not limited thereto. The window 310 may form a portion of an exterior of the electronic device 101. For example, the window 310 may define a front side (e.g., the first front surface 211 and the second front surface 221 of FIG. 2A) of the electronic device 101.

For example, the display 230 may include a reinforcement layer 330 attached under the window 310. The reinforcement layer 330 may be a substantially transparent thin film type layer. The reinforcement layer 330 may reinforce the window 310 by being attached under the window 310. The reinforcement layer 330 may be formed from, for example, at least one of polyimide (PI) or ultra-thin glass (UTG), but an embodiment is not limited thereto. The reinforcement layer 330 may be configured to be at least partially deformable together with the window 310 attached on the reinforcement layer 330.

For example, the display 230 may include a display panel 340 attached under the reinforcement layer 330. The display panel 340 may be configured to provide visual information, for example, through the reinforcement layer 330 and the window 310 on the display panel 340 that are substantially transparent. For example, although not illustrated, the display panel 340 may include pixels configured to emit light and sub-pixels included in each of the pixels. However, an embodiment supported by the present disclosure is not limited thereto.

For example, the display 230 may include a support layer 350 attached under the display panel 340. The support layer 350 may reduce damage to the display panel 340 while the display 230 is transformed, by supporting the display panel 340.

Layers or a stack structure of the layers included in the display 230 supported by the present disclosure is not limited to the above-mentioned embodiments, and for example, a portion of the layers in the above-mentioned display 230 may be omitted or one or more layers may be added in the display 230.

For example, the display 230 may include a polarizer attached under the window 310. The polarizer may reduce the amount of light reflected in the display 230 after being incident from the outside of the electronic device 101. As the amount of light reflected in the display 230 is reduced, visibility of the display 230 may be improved. However, an embodiment supported by the present disclosure is not limited thereto, and the display 230 may include a plurality of layers including at least partially deformable areas and/or a stack structure of the plurality of layers.

The housing 200 may support the display 230. The housing 200 may include the first housing part 210 supporting the first display portion 231 and the second housing part 220 supporting the second display portion 232. For example, the first housing part 210 may surround at least a portion of the first display portion 231. The second housing part 220 may surround at least a portion of the second display portion 232. For example, the second housing part 220 may be configured to be rotatable with respect to the first housing part 210. The second housing part 220 may rotate the second display portion 232 with respect to the first display portion 231 by rotating with respect to the first housing part 210. For example, when the display 230 is viewed from above (e.g., when viewed in a -z direction), the first housing part 210 may at least partially overlap the first display portion 231. For example, when the display 230 is viewed from above (e.g., when viewed in the -z direction), the second housing part 220 may at least partially overlap the second display portion 232.

For example, the first display portion 231 may be disposed on the first housing part 210. The second display portion 232 may be disposed on the second housing part 220. In this document, when an element is referred to as being "on" another element, it should be understood that it may be directly on the other element or there may be intervening elements therebetween. In addition, when an element is referred to as being "on" another element, it should be noted that it may mean that the element may be attached to, integrally coupled to, or formed with the other element, and does not limit a disposition relationship between the two elements.

For example, in this document, "B disposed on A" may indicate "B disposed over A". For example, in this document, "B disposed on A" may indicate "B facing A and spaced apart from A". For example, "the first display portion 231 disposed on the first housing part 210" may indicate "the first display portion 231 in contact with the first housing part 210". For example, "the first display portion 231 disposed on the first housing part 210" may indicate "the first display portion 231 facing the first housing part 210 and spaced apart from the first housing part 210".

The hinge structure 250 may be configured to provide the folded state in which the first display portion 231 faces the second display portion 232, and the unfolded state in which the first display portion 231 and the second display portion 232 face substantially the same direction by rotatably coupling the first housing part 210 and the second housing part 220. For example, the hinge structure 250 may rotatably connect the first housing part 210 and the second housing part 220. For example, the hinge structure 250 may be at least partially disposed between the first housing part 210 and the second housing part 220. For example, the hinge structure 250 may support the third display portion 233 of the display 230. For example, the hinge structure 250 may be configured to transform the third display portion 233 by rotatably coupling the first housing part 210 and the second housing part 220. For example, the hinge structure 250 may at least partially overlap the third display portion 233 when the display 230 is viewed from above (e.g., when viewed in the -z direction).

The support plate 410 may support the display 230 attached on the support plate 410 or display layers included in the display 230. The support plate 410 may include a first supporting portion 411 disposed under the first display portion 231 of the display 230, a second supporting portion 412 disposed under the second display portion 232 of the display 230, and a third supporting portion 413 disposed under the third display portion 233 of the display 230. For example, the first supporting portion 411 may be spaced apart from the second supporting portion 412. For example, the third supporting portion 413 may connect the first supporting portion 411 and the second supporting portion 412. The third supporting portion 413 may extend from the first supporting portion 411 to the second supporting portion 412. For example, the third supporting portion 413 of the support plate 410 may include a plurality of slits 415 to provide flexibility to the third display portion 233 of the display 230. For example, the support plate 410 may be formed from metal or carbon fiber reinforced polymer (CFRP) to support the display 230, but an embodiment supported by the present disclosure is not limited thereto, and for example, in at least a portion of the first supporting portion 411 and/or at least a portion of the second supporting portion 412 connected to the third supporting portion 413, a portion of the plurality of slits 415 may be formed to reduce damage to the display portions 231 and 232 of the display 230 while the electronic device 101 changes from the unfolded state to the folded state or from the folded state to the unfolded state. However, an embodiment supported by the present disclosure is not limited thereto.

For example, each of the plurality of slits 415 may have a width in a direction parallel to an x-axis. The width of each of the plurality of slits 415 may be substantially the same, but is not limited thereto. For example, a size and/or a length of each of at least a portion of the plurality of slits 415 may be different. For example, the plurality of slits 415 may be formed in at least a portion of the first supporting portion 411 and at least a portion of the third supporting portion 413. The plurality of slits 415 may be arranged to gradually decrease in a width and/or a length from the first supporting portion 411 to a center portion of the third supporting portion 413. For example, the plurality of slits 415 may be formed in a portion of the second supporting portion 412 and at least a portion of the third supporting portion 413. The plurality of slits 415 may be arranged to gradually decrease in a width and/or a length from the second supporting portion 412 to the center portion of the third supporting portion 413. For example, the plurality of slits 415 may be arranged so that density per unit area in the support plate 410 decreases from the first supporting portion 411 and/or the second supporting portion 412 to the third supporting portion 413. However, an embodiment supported by the present disclosure is not limited thereto, and the plurality of slits 415 may be formed or disposed in various forms to provide flexibility to the third display portion 233 of the display 230. For example, the support plate 410 may guide transformation of display layers included in the third display portion 233 and disposed on the support plate 410 and may support the display layers, by including the third supporting portion 413 including the plurality of slits 415. The support plate 410 may be referred to as a lattice structure and/or a lattice plate in terms of including the plurality of slits 415 for guiding transformation of the display 230, but is not limited thereto.

The electronic device 101 may include a protection member 420 attached under the third supporting portion 413 of the support plate 410. The protection member 420 may have elasticity so as to be transformed as the third supporting portion 413 of the support plate 410 is transformed. The protection member 420 may include, for example, thermoplastic polyurethane (TPU), but an embodiment supported by the present disclosure is not limited thereto. The protection member 420 may cover, for example, the plurality of slits 415 formed in the third supporting portion 413. For example, the protection member 420 may be disposed between an adhesive layer 324 that attach an electromagnetic induction panel 430 to the support plate 410. The protection member 420 may reduce a step formed by the adhesive layer 324, by being disposed between the adhesive layer 324. The protection member 420 may reduce an inflow of a foreign matter into the plurality of slits 415 formed in the third supporting portion 413, by being attached under the third supporting portion 413. However, an embodiment supported by the present disclosure is not limited thereto.

The electronic device 101 may include the electromagnetic induction panel 430 capable of interacting with a stylus that may be used with the display 230. The electromagnetic induction panel 430 may be referred to as a digitizer in terms of interacting with the stylus, but is not limited thereto. For example, the electromagnetic induction panel 430 may be configured to interact electromagnetically with the stylus. A processor (e.g., the processor 120 of FIG. 1) of the electronic device 101 may be configured to obtain input information from the electrical interaction between the stylus and the electromagnetic induction panel 430. For example, the electromagnetic induction panel 430 may generate a magnetic field of specified intensity as an alternating current (AC) flows inthe electromagnetic induction panel 430. As the stylus approaches the electromagnetic induction panel 430, an induced current may flow in a coil disposed in the stylus by the magnetic field. The stylus may transmit an electromagnetic wave signal to the electromagnetic induction panel 430, by detecting the induced current flowing in the coil. The electromagnetic induction panel 430 may be configured to transmit information related to the electromagnetic wave signal to the processor 120 of the electronic device 101, by detecting a position and intensity of the electromagnetic wave signal received from the stylus. The processor 120 may be configured to display information according to an operation of the stylus through the display 230, by receiving information related to the electromagnetic wave signal from the electromagnetic induction panel 430.

For example, the electromagnetic induction panel 430 may be attached (e.g., through the adhesive layer 324) under the support plate 410. For example, the electromagnetic induction panel 430 may include a first panel 431 attached to the first supporting portion 411 of the support plate 410 and a second panel 432 attached to the second supporting portion 412 of the support plate 410 to provide flexibility to the third display portion 233 of the display 230. Each of the first panel 431 and the second panel 432 may be separated from each other based on the third display portion 233 of the display 230. As the first panel 431 and the second panel 432 are separated, the electromagnetic induction panel 430 may provide flexibility to the third display portion 233 of the display 230 while the electronic device 101 changes from the unfolded state to the folded state or from the folded state to the unfolded state.

The electronic device 101 may include a shielding layer 440 for absorbing an electromagnetic wave from the electromagnetic induction panel 430. The shielding layer 440 may be attached under the electromagnetic induction panel 430. The shielding layer 440 may include, for example, magnetic metal powder (MMP), but an embodiment is not limited thereto. For example, the shielding layer 440 may cover a portion of the electromagnetic induction panel 430. For example, the shielding layer 440 may include shielding portions 441, 442, and 443 separated from each other to provide flexibility to the third display portion 233 of the display 230. For example, the first shielding portion 441 may be attached under the first panel 431. The second shielding portion 442 may be attached under the second panel 432. The third shielding portion 443 may be attached under a portion of the first panel 431 and a portion of the second panel 432. For example, the third shielding portion 443 may be disposed under the third display portion 233 of the display 230 in the unfolded state of the electronic device 101. However, an embodiment supported by the present disclosure is not limited thereto.

The electronic device 101 may include a conductive layer 450 for reducing influence of the electromagnetic induction panel 430 by at least one conductive portion (e.g., the at least one conductive portion 225 of FIG. 2A) included in the housing 200. The conductive layer 450 may be attached (e.g., through an adhesive layer 325) under the shielding layer 440. The conductive layer 450 may include, for example, at least one of copper and polyethylene terephthalate (PET), but an embodiment is not limited thereto. The conductive layer 450 may be configured so that a frequency of a signal from the electromagnetic induction panel 430 is maintained uniformly. The conductive layer 450 may include a first conductive layer 451 attached under the first shielding portion 441 and a second conductive layer 452 attached under the second shielding portion 442. However, an embodiment supported by the present disclosure is not limited thereto.

The electronic device 101 may include one or more adhesive layers 320 for attaching display layers in the display 230 and/or a plurality of layers attached under the display 230 to each other. For example, the display 230 may include adhesive layers 321 and 322. The adhesive layer 321 may attach the reinforcement layer 330 to the window 310 by being interposed between the window 310 and the reinforcement layer 330. The adhesive layer 322 may attach the display panel 340 to the reinforcement layer 330, by being interposed between the reinforcement layer 330 and the display panel 340.

For example, the electronic device 101 may include an adhesive layer 323 that attaches the support plate 410 to the display 230 by being interposed between the display 230 and the support plate 410. For example, the electronic device 101 may include the adhesive layer 324 that attaches the electromagnetic induction panel 430 to the support plate 410 by being interposed between the support plate 410 and the electromagnetic induction panel 430. For example, the electronic device 101 may include the adhesive layer 325 that attaches the conductive layer 450 to the shielding layer 440 by being interposed between the shielding layer 440 and the conductive layer 450. However, an embodiment supported by the present disclosure is not limited thereto, and the one or more adhesive layers 320 may include a plurality of adhesive layers configured to attach the plurality of display layers in the display 230 to each other or attach the plurality of layers under the display 230 to each other, and a characteristic of each of the plurality of adhesive layers may be substantially the same or different from each other.

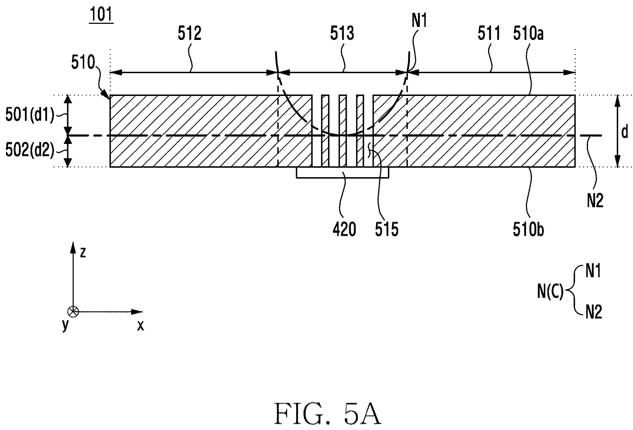

In case that the support plate 410 is formed from metal, signal interference may occur between the electromagnetic induction panel 430 disposed under the support plate 410 and the stylus outside the electronic device 101 by the support plate 410. In addition, for example, in case that the support plate 410 is formed from CFRP, the visibility of the display 230 may be reduced or a reinforcement performance of the display 230 may be reduced by the support plate 410. The electronic device 101 may require the support plate 410 and/or a structure around the support plate 410 to reinforce the visibility and rigidity of the display 230 while reducing the signal interference with respect to the electromagnetic induction panel 430. In this respect, according to the embodiments of the invention, an improved structure for reinforcing a flexible display is provided. The structure will be described through examples of FIG. 5A or below.

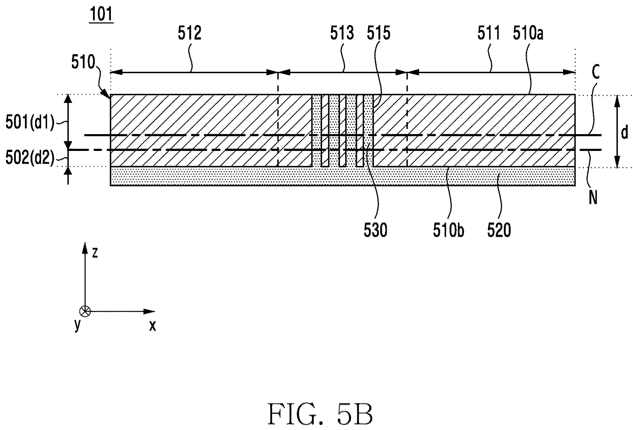

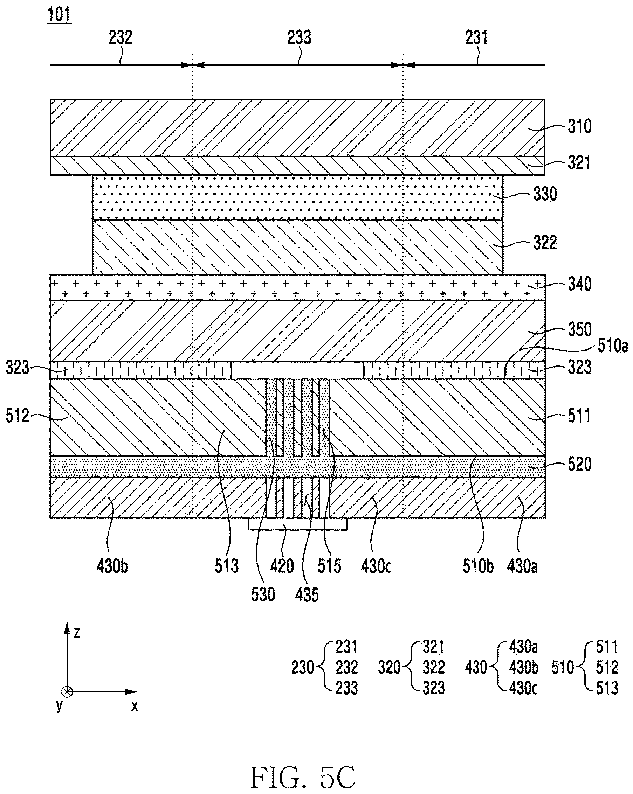

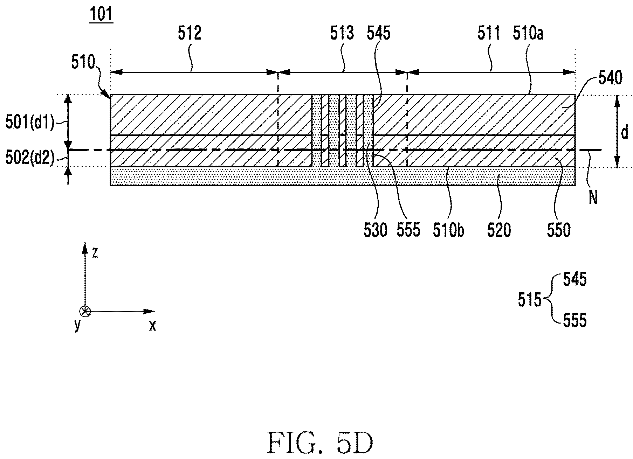

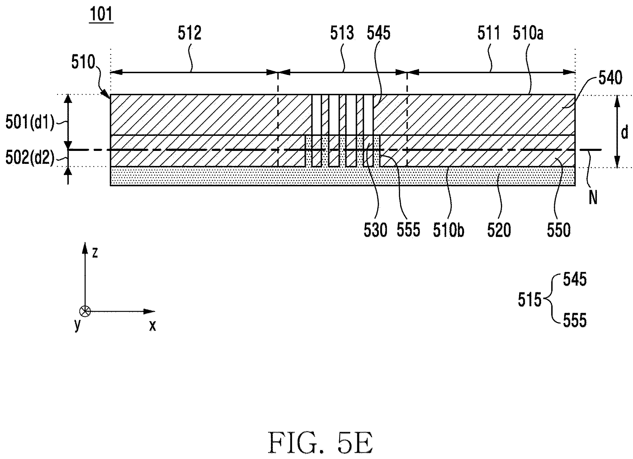

FIG. 5A illustrates a support plate of an exemplary electronic device. FIG. 5B illustrates a support plate to which a first protection layer of an exemplary electronic device is attached. FIG. 5C illustrates a portion of an exemplary electronic device. FIGS. 5D and 5E illustrate a support plate to which a protection layer of an exemplary electronic device is attached.

Referring to FIGS. 5A, 5B, and 5C, an electronic device 101 may include a display 230 and a support plate 510 supporting a display 230. The display 230 may include the display 230 including a first display portion 231, a second display portion 232, and a third display portion 233 extending from the first display portion 231 to the second display portion 232 and is foldable. However, an embodiment supported by the present disclosure is not limited thereto, and as exemplarily illustrated in FIG. 5C, the electronic device 101 may include the structures and/or the configurations (e.g., the housing 200, the hinge structure 250, the window 310, the one or more adhesive layers 320 and/or the adhesive layers 321, 322, and 323, the reinforcement layers 330, the display panel 340, the support layer 350, the protection member 420, and the electromagnetic induction panel 430) exemplarily illustrated and described in FIG. 4. Hereinafter, an overlapping description of configurations having the same reference numerals as described in FIG. 4 will be omitted.

The support plate 510 may be formed from glass. The support plate 510 may include a first supporting portion 511 disposed under the first display portion 231, a second supporting portion 512 disposed under the second display portion 232, and a third supporting portion 513 disposed under the third display portion 233 and including a plurality of slits 515. The supporting portions 511, 512, and 513 of the support plate 510 and/or a disposition of the supporting portions 511, 512, and 513 of the support plate 510 may be substantially the same as or similar to a disposition of the support plate 410 and/or the supporting portions 411, 412, and 413 of the support plate 410 of FIG. 4. For example, the first supporting portion 511 may be aligned under the first display portion 231 of the display 230. The second supporting portion 512 may be aligned under the second display portion 232 of the display 230. The third supporting portion 513 may be aligned under the third display portion 233 of the display 230 between the first supporting portion 511 and the second supporting portion 512. However, an embodiment supported by the present disclosure is not limited thereto.

For example, the support plate 510 may be substantially transparent. The support plate 510 may be referred to as a glass layer and/or a glass plate, for example, such as the window 310 and/or the reinforcement layer 330 exemplarily illustrated and described in FIGS. 4 and 5C. Since the support plate 510 is formed from glass, signal interference of the electromagnetic induction panel 430 disposed under the support plate 510 may be reduced and visibility of the display 230 may be improved. For example, the glass forming the support plate 510 may have higher rigidity than CFRP. The glass may have surface roughness less than the CFRP. However, an embodiment supported by the present disclosure is not limited thereto.

A neutral plane N of the support plate 510 may be a plane in which tensile stress and compressive stress exerted to the support plate 510 are balanced while a state of the electronic device 101 is changed. For example, a portion of the support plate 510 corresponding to the neutral plane N of the support plate 510 may be a portion to which stress is not substantially exerted while the state of the electronic device 101 changes as the tensile stress and the compressive stress are balanced. For example, the neutral plane N of the support plate 510 may correspond to a first neutral plane N1 that is bent in a folded state of the electronic device 101, as illustrated in FIG. 5A. The neutral plane N of the support plate 510 may correspond to a substantially planar second neutral plane N2 in an unfolded state of the electronic device 101. However, as the neutral plane N described in the present disclosure is only exemplarily described as a virtual plane for convenience of illustration and description, an embodiment is not limited thereto, and the neutral plane N of the support plate 510 may be transformed or moved as the state of the electronic device 101 is changed.

A central plane C of the support plate 510 may be a plane including a center (or a center of gravity) of the support plate 510. For example, the central plane C may be a plane including midpoints of a first surface 510a facing the display 230 of the support plate 510 and a second surface 510b opposite the first surface 510a. A distance from the central plane C to the first surface 510a of the support plate 510 may correspond to or may be substantially the same as a distance from the central plane C to the second surface 510b.

When referring to FIG. 5A, the support plate 510 may include a first portion 501 to which the compressive stress is exerted in the folded state of the electronic device 101 and a second portion 502 to which the tensile stress is exerted in the folded state of the electronic device 101. For example, the first portion 501 may be a portion compressed in the folded state of the electronic device 101 by being disposed adjacent to the display 230 among the support plate 510. The second portion 502 may be a portion that is tensile in the folded state of the electronic device 101 by being formed under the first portion 501. For example, the first portion 501 and the second portion 502 may be defined based on the neutral plane N. The first portion 501 may be a portion disposed above the neutral plane N. The second portion 502 may be a portion disposed under the neutral plane N. For example, the first portion 501 may be a portion defining the first surface 510a facing the display 230 of the support plate 510. The second portion 502 may be a portion defining the second surface 510b opposite to the first surface 510a of the support plate 510. However, an embodiment supported by the present disclosure is not limited thereto.

When referring to FIG. 5A, the neutral plane N of the support plate 510 may correspond to the central plane C of the support plate 510. For example, a thickness d1 of the first portion 501 to which the compressive stress is exerted in the folded state of the electronic device 101 may correspond to a thickness d2 of the second portion 502 to which the tensile stress is exerted in the folded state. As the support plate 510 is formed from the glass, the second portion 502 to which the tensile stress is exerted may be more vulnerable to damage than the first portion 501 to which the compressive stress is exerted. The electronic device 101 may require a structure for adjusting the neutral plane N of the support plate 510 to be positioned under the central plane C in order to reduce damage to the support plate 510 formed from glass.

Referring to FIG. 5B, the electronic device 101 may include a first protection layer 520 attached under the support plate 510. In an embodiment, the first protection layer 520 may be coated under the support plate 510. For example, the first protection layer 520 may be attached under the support plate 510. The first protection layer 520 may be attached to the second surface 510b opposite to the first surface 510a facing the display 230 of the support plate 510. For example, the first protection layer 520 may form a continuous layer under the support plate 510. For example, the first protection layer 520 may cover the plurality of slits 515 formed in the third supporting portion 513 of the support plate 510 instead of the protection member 420 of FIG. 5A. For example, the first protection layer 520 may cover the second surface 510b of the support plate 510 or may be attached on the second surface 510b. For example, the first protection layer 520 may be at least partially deformable to provide flexibility to the support plate 510. For example, the first protection layer 520 may have elasticity to support the support plate 510 that is transformed while the state of the electronic device 101 is changed. However, an embodiment supported by the present disclosure is not limited thereto.

For example, by the first protection layer 520, the neutral plane N of the support plate 510 may be positioned under the central plane C of the support plate 510. For example, the distance d1 between the first surface 510a facing the display 230 of the support plate 510 and the neutral plane N of the support plate 510 may be greater than the distance d2 between the second surface 510b opposite to the first surface 510a of the support plate 510 and the neutral plane N of the support plate 510. For example, the neutral plane N of the support plate 510 may be disposed adjacent to the second surface 510b among the first surface 510a of the support plate 510 facing the display 230 and the second surface 510b of the support plate 510 opposite to the first surface 510a. For example, the thickness d1 of the first portion 501 to which the compressive stress in the folded state of the electronic device 101 is exerted may be greater than the thickness d2 of the second portion 502 to which the tensile stress is exerted in the folded state. However, an embodiment is not limited thereto. By including the first protection layer 520 attached under the support plate 510, the electronic device 101 may reduce damage to the support plate 510 while the state of the electronic device 101 is changed, and may reduce damage to an internal structure of the electronic device 101 around the support plate 510 by damage to the support plate 510.

The first protection layer 520 may include at least one of shatterproof film or shatterproof coating. However, an embodiment is not limited thereto, and the first protection layer 520 may include various coating materials to prevent shattering of the damaged first protection layer 520 while the state of the electronic device 101 is changed.

The first protection layer 520 may include at least one of acrylic, silicone, or resin. However, an embodiment is not limited thereto, and for example, the first protection layer 520 may include various elastic materials (e.g., polyurethane, pressure sensitive adhesive (PSA), rubber, and the like) to provide flexibility to the support plate 510.

A thickness d of the support plate 510 may be within a range of approximately 30 µm to 150 µm. For example, the vertical distance d from the first surface 510a facing the display 230 of the support plate 510 to the second surface 510b opposite the first surface 510a may be within the range of approximately 30 µm to 150 µm. Preferably, the thickness d of the support plate 510 may be positioned within a range of approximately 60 µm to 80 µm to reduce damage to the support plate 510 and provide flexibility to the support plate 510. However, an embodiment supported by the present disclosure is not limited thereto.

A modulus of the support plate 510 may be within a range of approximately 60 GPa to 80 GPa. Preferably, the modulus of the support plate 510 may be approximately 73 GPa to reduce damage to the support plate 510 and provide flexibility to the support plate 510. However, an embodiment supported by the present disclosure is not limited thereto.

The electronic device 101 may include an elastic material 530 filling the plurality of slits 515 of the third supporting portion 513. For example, the elastic material 530 may be in contact with the first protection layer 520 or may be connected to the first protection layer 520. For example, the elastic material 530 may be formed integrally with the first protection layer 520, by forming from substantially the same material as the first protection layer 520. For example, the elastic material 530 may occupy an inner space of the plurality of slits 515. For example, the elastic material 530 may provide flexibility to the third display portion 233 of the display 230 by being transformed together with the third supporting portion 513 while the state of the electronic device 101 is changed. For example, the elastic material 530 may be a shatterproof layer and/or shatterproof coating, such as the first protection layer 520, but an embodiment supported by the present disclosure is not limited thereto. The electronic device 101 may reduce damage to the third supporting portion 513 that is transformed while the state of the electronic device 101 is changed, by including the elastic material 530 filling the plurality of slits 515 of the third supporting portion 513.

Referring to FIG. 5C, the electromagnetic induction panel 430 may be attached under the first protection layer 520. For example, the first protection layer 520 may be interposed between the electromagnetic induction panel 430 and the support plate 510. For example, the first protection layer 520 may form a continuous layer between the support plate 510 and the electromagnetic induction panel 430. For example, the first protection layer 520 may attach the electromagnetic induction panel 430 under the support plate 510 by including an adhesive material. However, an embodiment supported by the present disclosure is not limited thereto.

For example, the electromagnetic induction panel 430 may include a first panel portion 430a attached under the first display portion 231, a second panel portion 430b attached under the second display portion 232, and a third panel portion 430c extending from the first panel portion 430a to the second panel portion 430b and including a plurality of slits 435. The protection member 420 of the electronic device 101 may be attached under the third panel portion 430c to cover the plurality of slits 435 of the third panel portion 430c. For example, the first panel portion 430a may be aligned with respect to the first supporting portion 511 of the support plate 510. The second panel portion 430b may be aligned with respect to the second supporting portion 512 of the support plate 510. The third panel portion 430c may be aligned under the third supporting portion 513 of the support plate 510. For example, the plurality of slits 435 of the third panel portion 430c may be formed under the plurality of slits 515 of the third supporting portion 513. However, an embodiment supported by the present disclosure is not limited thereto.

Referring to FIGS. 5D and 5E, the support plate 510 may include a coupling structure and/or a stack structure of two or more glass plates (e.g., glass plates 540 and 550), unlike the illustration in FIGS. 5A to 5C. For example, as illustrated in FIGS. 5D and 5E, the support plate 510 may include the first glass plate 540 and the second glass plate 550 disposed under the first glass plate 540. For example, the first glass plate 540 may include first openings 545 formed in the third supporting portion 513 among the plurality of slits 515 of the support plate 510. The second glass plate 550 may include second openings 555 formed in the third supporting portion 513 among the plurality of slits 515. However, an embodiment supported by the present disclosure is not limited to thereto, and the support plate 510 may include a bonding or coupling structure of a plurality of glass plates.

For example, the first glass plate 540 may define the first surface 510a facing the display 230 of the support plate 510. The second glass plate 550 attached under the first glass plate 540 may define the second surface 510b opposite to the first surface 510a. For example, the first protection layer 520 may be attached under the second glass plate 550. As the first protection layer 520 is attached under the second glass plate 550, the neutral plane N of the support plate 510 may be formed in the second glass plate 550. For example, PSA, transparent resin, shatterproof coating, and/or a shatterproof layer may be disposed between the glass layers 540 and 550, but an embodiment supported by the present disclosure is not limited thereto.

Referring to FIG. 5D, the first openings 545 in the third supporting portion 513 may be aligned with the second openings 555, respectively. Since the first openings 545 are aligned with the second openings 555, the elastic material 530 connected to the first protection layer 520 may fill both the first openings 545 and the second openings 555.

Referring to FIG. 5E, unlike FIG. 5D, at least a portion of the first openings 545 may be misaligned with at least a portion of the second openings 555, respectively. For example, the elastic material 530 connected to the first protection layer 520 may be disposed in the second openings 555 among the first openings 545 and the second openings 555. However, the embodiment supported by the present disclosure is not limited thereto, and a size, a width, and a shape of a pattern of the openings 545 and 555 formed on each of the glass plates 540 and 550 may be different. For example, a width (or a size) of each of the second openings 555 of the second glass plate 550 in which the neutral plane N is formed may be greater than a width (or a size) of each of first slits of the first glass plate 540 to accommodate the elastic material 530, but an embodiment supported by the present disclosure is not limited thereto.

According to the above-described embodiment, the support plate 510 of the electronic device 101 may improve visibility of the display 230 of the electronic device 101 and increase rigidity of the support plate 510 by including glass. The electronic device 101 may reduce damage to the support plate 510 while the state of the electronic device 101 is changed, by including the first protection layer 520 attached under the support plate 510.

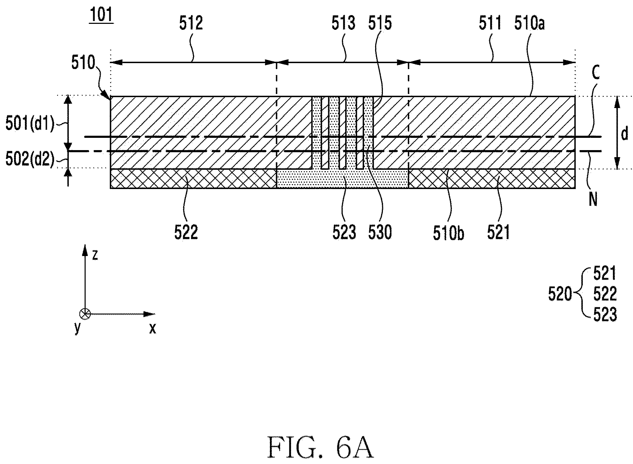

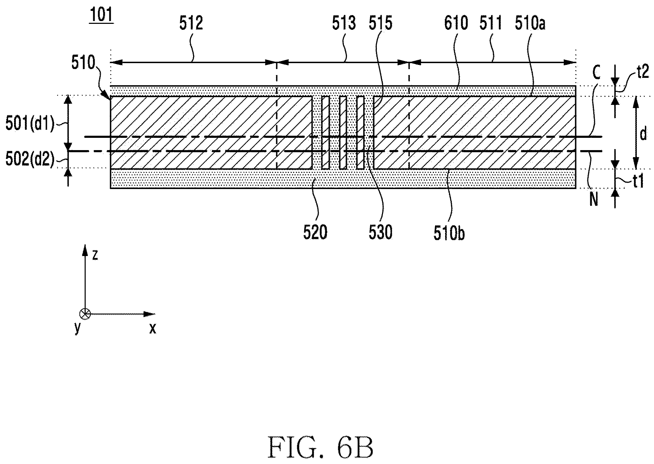

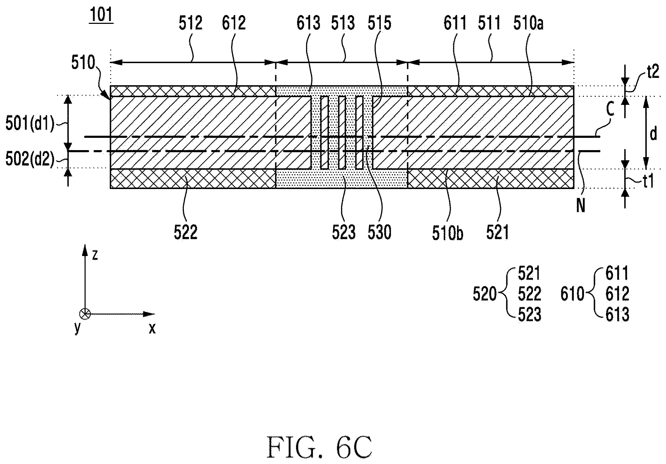

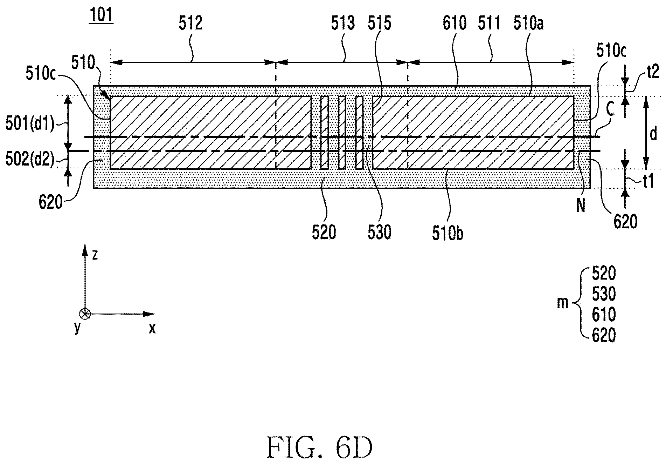

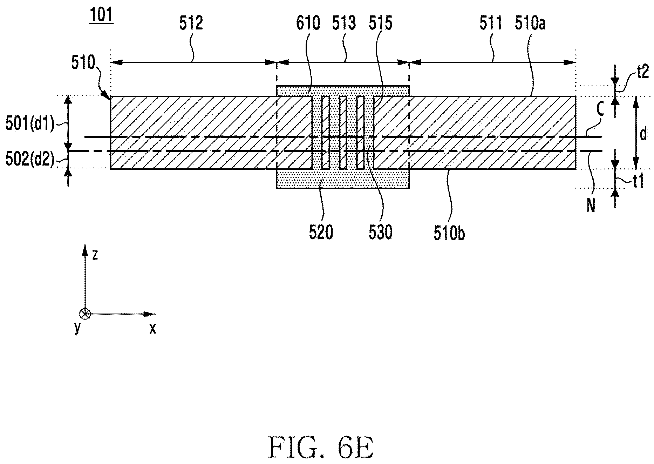

FIGS. 6A, 6B, 6C, 6D, and 6E illustrate a support plate to which a first protection layer of an exemplary electronic device is attached.

Referring to FIGS. 6A, 6B, 6C, 6D, and 6E, an electronic device 101 may include a display (e.g., the display 230 of FIG. 2A), a support plate 510 supporting the display 230, and a first protection layer 520 attached under the support plate 510. The display 230 may include a first display portion (e.g., the first display portion 231 of FIG. 2A), a second display portion (e.g., the second display portion 232 of FIG. 2A), and a third display portion (e.g., the third display portion 233 of FIG. 2A) extending from the first display portion 231 to the second display portion 232 and being foldable. The support plate 510 may be formed from glass and may include a first supporting portion 511 disposed under the first display portion 231, a second supporting portion 512 disposed under the second display portion 232, and a third supporting portion 513 disposed under the third display portion 233 and including a plurality of slits 515. However, an embodiment supported by the present disclosure is not limited thereto, and the electronic device 101 may include the structures and/or the configurations (e.g., the housing 200, the hinge structure 250, the window 310, the one or more adhesive layers 320 and/or the adhesive layers 321, 322, and 323, the reinforcement layer 330, the display panel 340, the support layer 350, the protection member 420, the electromagnetic induction panel 430, and the elastic material 530) exemplarily illustrated and described in FIGS. 4 to 5C. Hereinafter, an overlapping description of configurations having the same reference numerals as described in FIGS. 4 to 5C will be omitted.

Referring to FIG. 6A, the first protection layer 520 may include a first protecting portion 521 attached under the first supporting portion 511, a second protecting portion 522 attached under the second supporting portion 512, and a third protecting portion 523 attached under the third supporting portion 513. For example, the first protecting portion 521 may be aligned under the first supporting portion 511. The second protecting portion 522 may be aligned under the second supporting portion 512. The third protecting portion 523 may cover the plurality of slits 515 of the third supporting portion 513 by being aligned under the third supporting portion 513. The third protecting portion 523 may be disposed between the first protecting portion 521 and the second protecting portion 522. For example, the elastic material 530 may be connected to the third protecting portion 523 among the protecting portions 521, 522, and 523, or may be formed integrally with the third protecting portion 523. However, an embodiment supported by the present disclosure is not limited thereto.

A modulus of the third protecting portion 523 may be smaller than a modulus of the first protecting portion 521 and a modulus of the second protecting portion 522. For example, a material forming the third protecting portion 523 may be different from a material forming the first protecting portion 521 and/or the second protecting portion 522. For example, rigidity of the first protecting portion 521 may be greater than rigidity of the third protecting portion 523. Rigidity of the second protecting portion 522 may be greater than the rigidity of the third protecting portion 522. The third protecting portion 523 may be a portion that have elasticity or is deformable among the protecting portions 521, 522, and 523 of the first protection layer 520. For example, the first protecting portion 521 and/or the second protecting portion 522 may be portions having a substantially planar shape while a state of the electronic device 101 is changed. For example, the first protecting portion 521 and/or the second protecting portion 522 may be portions that are not substantially transformed while the state of the electronic device 101 is changed. However, an embodiment supported by the present disclosure is not limited thereto. As the modulus of the third protecting portion 523 is configured to be smaller than the modulus of the first protecting portion 521 and the modulus of the second protecting portion 522, the first protection layer 520 may provide flexibility of the third supporting portion 513 and support the first supporting portion 511 and the second supporting portion 512.

Referring to FIGS. 6B to 6E, the electronic device 101 may include a second protection layer 610 attached on the support plate 510. In an embodiment, the second protection layer 610 may be coated on the support plate 510. A thickness t1 of the first protection layer 520 may be greater than a thickness t2 of the second protection layer 610. For example, the second protection layer 610 may be disposed on a first surface 510a facing the display 230 of the support plate 510. The second protection layer 610 may cover the first surface 510a of the support plate 510. The second protection layer 610 may seal or cover the plurality of slits 515 formed in the third supporting portion 513 together with the first protection layer 520 disposed on a second surface 510b opposite the first surface 510a.

For example, as the thickness t2 of the second protection layer 610 attached above the support plate 510 is less than the thickness t1 of the first protection layer 520 attached under the support plate 510, a neutral plane N of the support plate 510 may be positioned under a central plane C of the support plate 510. For example, the second protection layer 610 may be formed from a material substantially the same as or similar to the first protection layer 520. For example, the second protection layer 610 may include at least one of shatterproof film or shatterproof coating, such as the first protection layer 520, but an embodiment supported by the present disclosure is not limited thereto.

Referring to FIG. 6B, the second protection layer 610 may form a continuous layer on the first surface 510a facing the display 230 of the support plate 510. The second protection layer 610 may be formed from, for example, substantially the same material as the elastic material 530 filling the plurality of slits 515 of the third supporting portion 513, or may be formed integrally with the elastic material 530. For example, the second protection layer 610 may form coating integrally formed with the first protection layer 520 and the elastic material 530 to prevent shattering of the support plate 510. For example, the elastic material 530 may extend from the first protection layer 520 to the second protection layer 610 in the plurality of slits 515. However, an embodiment supported by the present disclosure is not limited thereto.

Referring to FIG. 6C, when referring to FIG. 6A together, the second protection layer 610 may include a fourth protecting portion 611 disposed on the first supporting portion 511, a fifth protecting portion 612 disposed on the second supporting portion 512, and a sixth protecting portion 613 disposed on the third supporting portion 513. For example, when referring to the exemplary illustration and description of FIG. 6A together, similar to the first protection layer 520, a modulus of the sixth protecting portion 613 may be smaller than a modulus of the fourth protecting portion 611 and a modulus of the fifth protecting portion 612. For example, the third protecting portion 523, the elastic material 530, and the sixth protecting portion 613 of the second protection layer 610 may be integrally formed. The third protecting portion 523, the elastic material 530, and the sixth protecting portion 613 formed integrally may be formed from a material different from the other protecting portions 521, 522, 611, and 612. For example, the third protecting portion 523, the elastic material 530, and the sixth protecting portion 613 may be portions that are elastically transformed while the state of the electronic device 101 is changed. The remaining other protecting portions 521, 522, 611, and 612 may be portions that are not substantially transformed while the state of the electronic device 101 is changed. However, an embodiment supported by the present disclosure is not limited thereto. The electronic device 101 may provide flexibility of the third supporting portion 513 and may support the first supporting portion 511 and the second supporting portion 512, by including the second protection layer 610 having the thickness t2 smaller than the first protection layer 520, and configured so that the modulus of the sixth protecting portion 613 is smaller than the modulus of the fourth protecting portion 611 and the modulus of the fifth protecting portion 612.

Referring to FIG. 6D, when referring to FIG. 6B together, the electronic device 101 may include a third protection layer 620 attached on a third surface 510c extending from the first surface 510a to the second surface 510b of the support plate 510. In an embodiment, the third protection layer 620 may be coated on the third surface 510c. For example, the third protection layer 620 may extend from the first protection layer 520 to the second protection layer 610. For example, the third protection layer 620 may cover, seal, surround, wrap, and/or coat the support plate 510 together with the first protection layer 520 and the second protection layer 610. For example, the first protection layer 520, the second protection layer 610, the elastic material 530, and the third protection layer 620 may be integrally formed. The first protection layer 520, the second protection layer 610, the elastic material 530, and the third protection layer 620 may be formed from a coating material m, but an embodiment supported by the present disclosure is not limited thereto. The electronic device 101 may reduce damage to structures of the electronic device 101 around the support plate as the support plate 510 is damaged, by including the third protection layer 620 surrounding the third surface 510c of the support plate 510.

Referring to FIG. 6E, the first protection layer 520 may be attached under the third supporting portion 513 among the supporting portions 511, 512, and 513 of the support plate 510. The second protection layer 610 may be attached on the third supporting portion 513 among the supporting portions 511, 512, and 513. For example, when referring to FIG. 6C together, the first protecting portion 521 and the second protecting portion 522 of the first protection layer 520 may be omitted. The fourth protecting portion 611 and the fifth protecting portion 612 of the second protection layer 610 may be omitted. For example, the first protection layer 520, the second protection layer 610, and the elastic material 530 may form coating that is attached to the third supporting portion 513 and formed integrally. However, an embodiment supported by the present disclosure is not limited thereto.

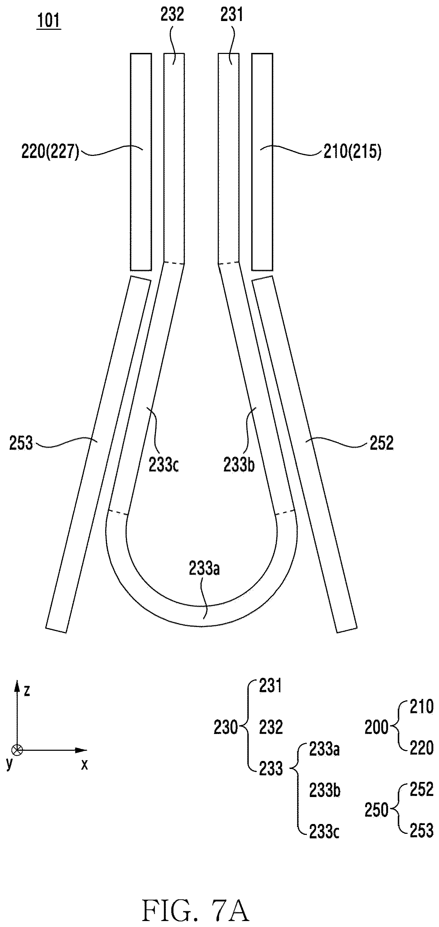

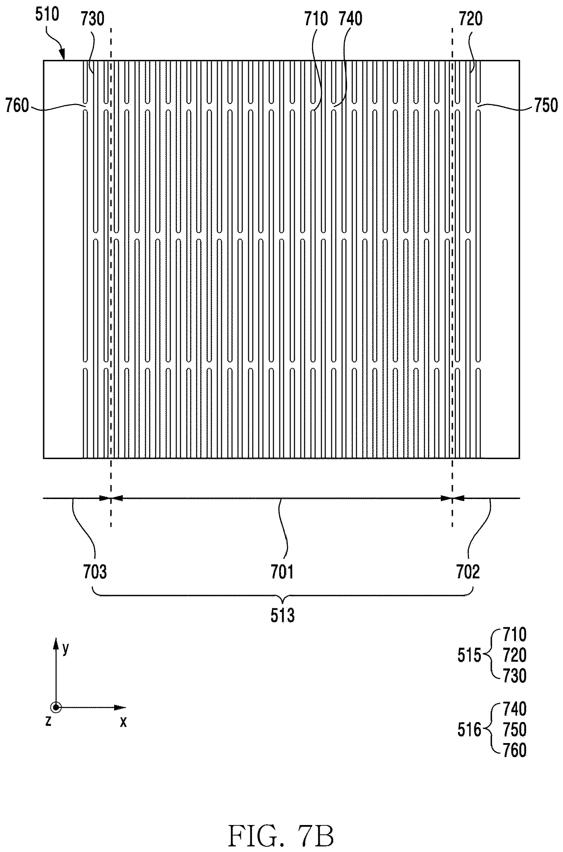

FIG. 7A illustrates a portion of an exemplary electronic device in a folded state. FIG. 7B illustrates a portion of a support plate of an exemplary electronic device.

Referring to FIGS. 7A and 7B, an electronic device 101 may include a display 230, the support plate 510 supporting the display 230, and the first protection layer (e.g., the first protection layer 520 of FIG. 5B) attached under the support plate 510. In an embodiment, the first protection layer may be coated under the support plate 510. The display 230 may include a first display portion 231, a second display portion 232, and a third display portion 233 extending from the first display portion 231 to the second display portion 232 and is foldable. The support plate 510 may be formed from glass and include a first supporting portion (e.g., the first supporting portion 511 of FIG. 5A) disposed under the first display portion 231, a second supporting portion (e.g., the second supporting portion 512 of FIG. 5A) disposed under the second display portion 232, and a third supporting portion 513 disposed under the third display portion 233 and including a plurality of slits 515. However, an embodiment supported by the present disclosure is not limited thereto, and the electronic device 101 may include the configurations (e.g., the housing 200, the hinge structure 250, the window 310, the one or more adhesive layers 320 and/or the adhesive layers 321, 322, and 323, the reinforcement layer 330, the display panel 340, the support layer 350, the protection member 420, the electromagnetic induction panel 430, and the elastic material 530) and/or the structures exemplarily illustrated and described in FIGS. 4 to 6E. Hereinafter, an overlapping description of configurations having the same reference numerals as described in FIGS. 4 to 6E will be omitted.

Referring to FIG. 7A, the third display portion 233 of the display 230 may include a transformation portion 233a, a first planar portion 233b between the transformation portion 233a and the first display portion 231, and a second planar portion 233c between the transformation portion 233a and the second display portion 232. For example, the transformation portion 233a may form a center portion of the display 230. The transformation portion 233a may provide a folding axis (e.g., the folding axis f of FIG. 2A) of the display 230. For example, while a state of the electronic device 101 is changed, the transformation portion 233a may be bent or unfolded. The planar portions 233b and 233c extending from the transformation portion 233a may be configured to maintain a substantially planar shape while the state of the electronic device 101 is changed. However, an embodiment supported by the present disclosure is not limited thereto.

Referring to FIG. 7B, the third supporting portion 513 of the support plate 510 may include a first bendable portion 701, a second bendable portion 702 disposed between the first bendable portion 701 and the first supporting portion 511, a third bendable portion 703 disposed between the first bendable portion 701 and the second supporting portion 512, and a plurality of bridges 516 forming ends of the plurality of slits 515 and spacing the plurality of slits 515 apart from each other. The plurality of slits 515 may include first slits 710 formed in the first bendable portion 701, second slits 720 formed in the second bendable portion 702, and third slits 730 formed in the third bendable portion 703. The plurality of bridges 516 may include first bridges 740 formed in the first bendable portion 701, second bridges 750 formed in the second bendable portion 702, and third bridges 760 formed in the third bendable portion 703.

For example, when referring to FIG. 7A together, the first bendable portion 701 may be disposed under the transformation portion 233a of the third display portion 233. The second bendable portion 702 may be disposed under the transformation portion 233a and the first planar portion 233b. The second bendable portion 702 may be a portion disposed under a boundary of the transformation portion 233a and the first planar portion 233b. The third bendable portion 703 may be disposed under the transformation portion 233a and the second planar portion 233c. The third bendable portion 703 may be a portion disposed under a boundary of the transformation portion 233a and the second planar portion 233c. However, it should be noted that the bendable portions 701, 702, and 703 of the third supporting portion 513 illustrated in the present disclosure are exemplarily illustrated only for convenience of explanation and do not limit a disposition relationship. In addition, patterns or sizes of the slits 710, 720, and 730 and/or bridges 740, 750, and 760 included in the bendable portions 701, 702, and 703 of the third supporting portion 513 may be different from each other. For example, based on the first bendable portion 701, a pattern of the second slits 750 formed in the second bendable portion 702 may be symmetrical or may be asymmetric to a pattern of the third slits 760 formed in the third bendable portion 703. However, an embodiment supported by the present disclosure is not limited thereto.

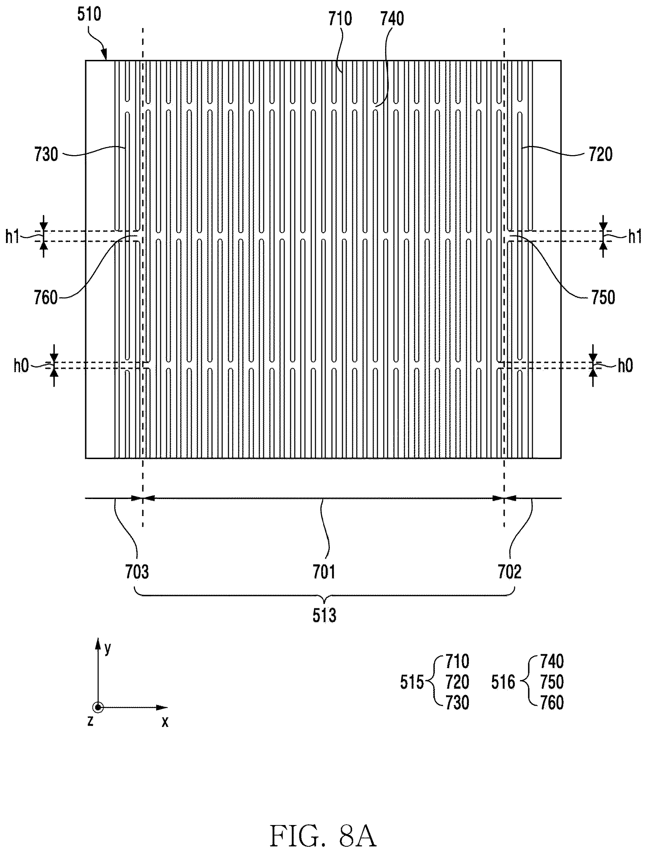

When referring to FIG. 7B, as the plurality of slits 515 have the same shape as each other, damage to the second bendable portion 702 and/or the third bendable portion 703 may be caused while the state of the electronic device 101 is changed. For example, the second slits 720 of the second bendable portion 702 disposed under the boundary of the transformation portion 233a and the first planar portion 233b may cause damage to the second bendable portion 702 while the state of the electronic device 101 is changed, by forming substantially the same pattern as the first slits 710 of the first bendable portion 701 disposed under the transformation portion 233a. For example, the third slits 730 of the third bendable portion 703 disposed under the boundary of the transformation portion 233a and the second planar portion 233c may cause damage to the third bendable portion 703 while the state of the electronic device 101 is changed, by forming substantially the same pattern as the first slits 710 of the first bendable portion 701 disposed under the transformation portion 233a. The third supporting portion 513 of the support plate 510 may require a structure in which shapes and/or patterns of the slits 710, 720, and 730 disposed on each of the bendable portions 701, 702, and 703 are different from each other, in order to reduce damage to the bendable portions 701, 702, and 703. The structure will be described through an exemplary illustration of FIG. 8A or below.

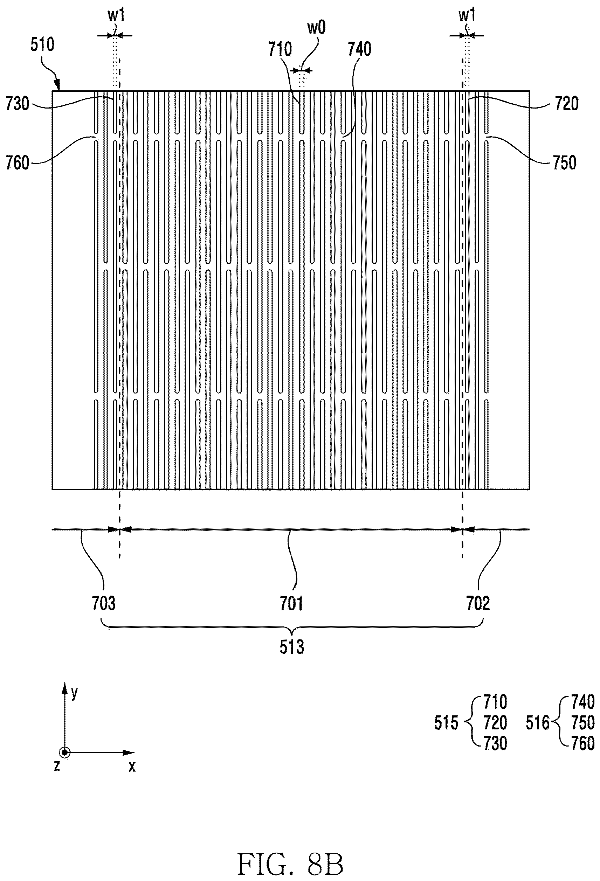

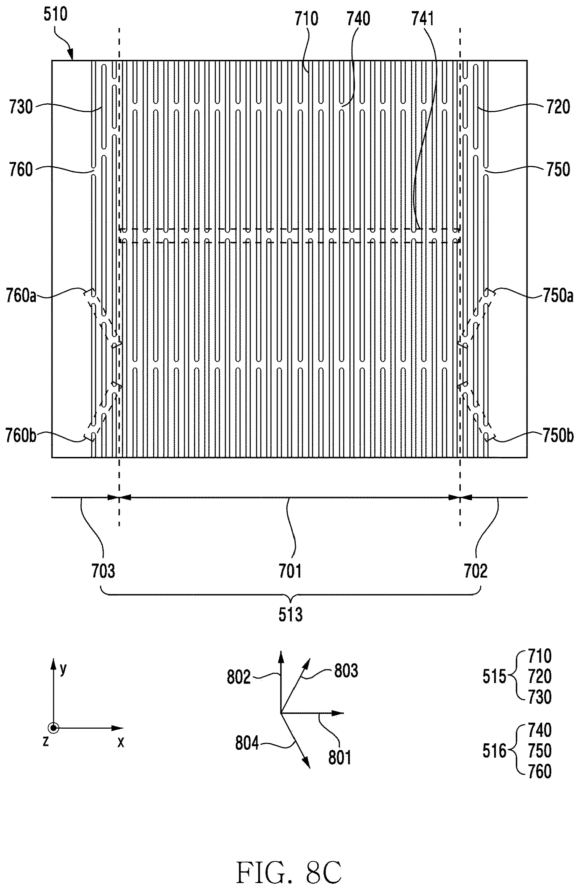

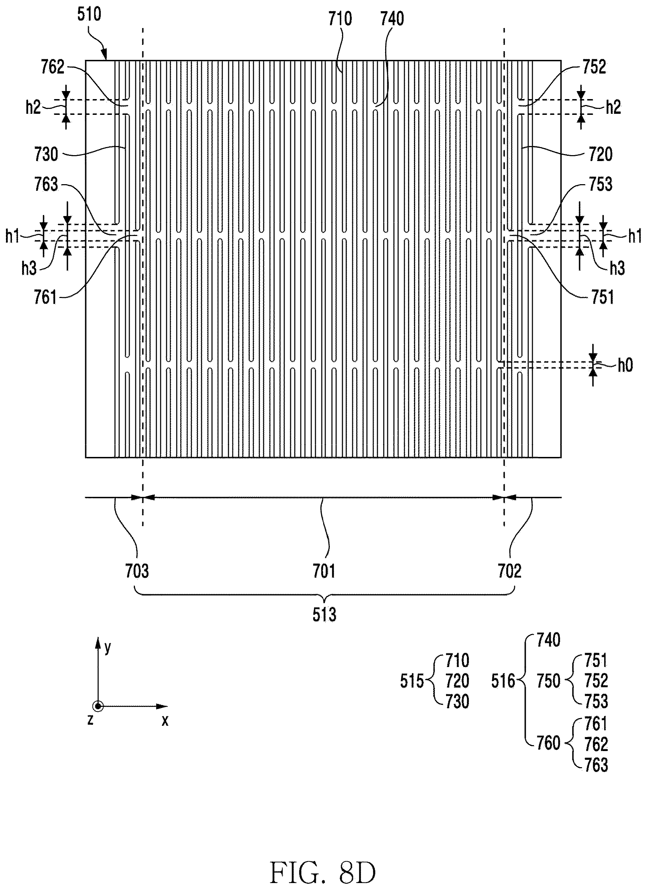

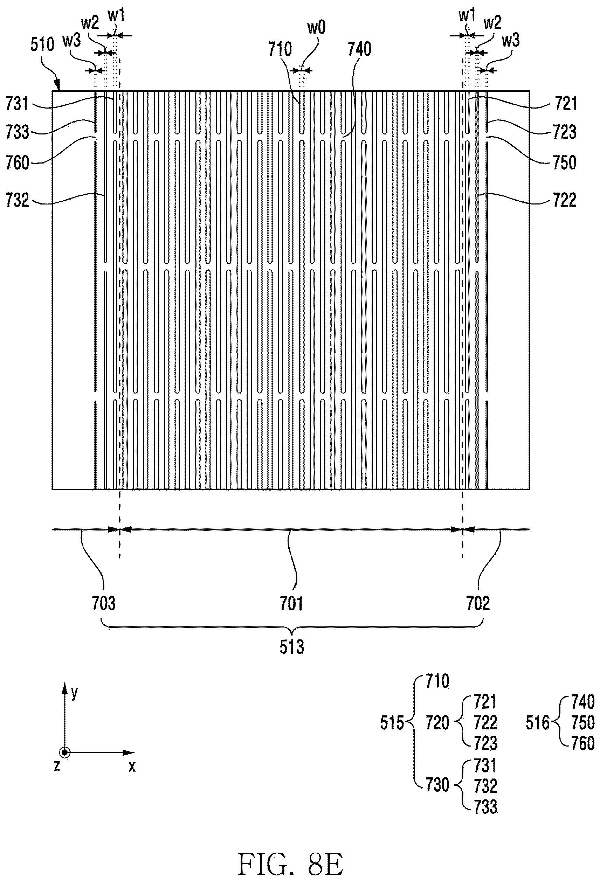

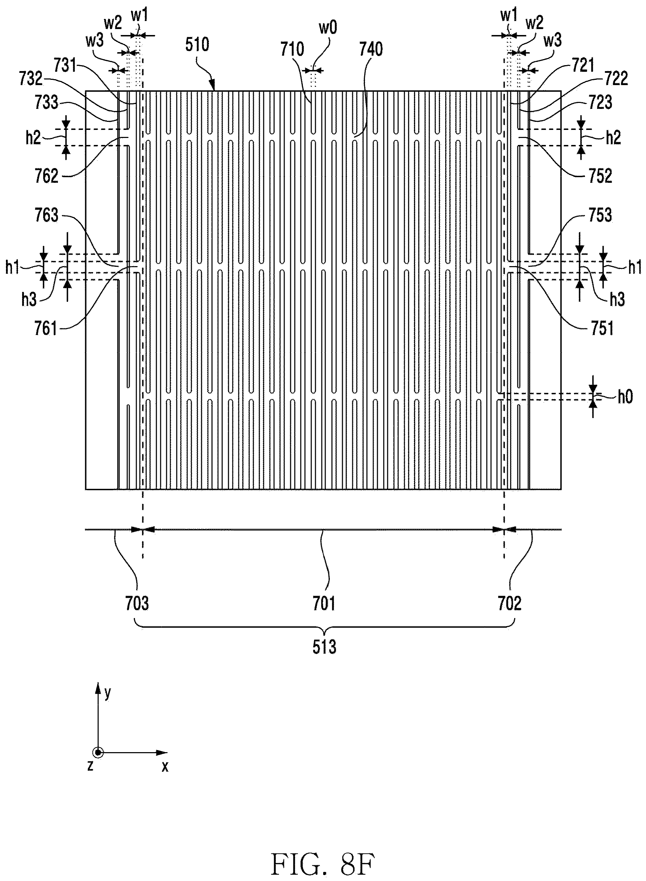

FIGS. 8A, 8B, 8C, 8D, 8E, and 8F illustrate a portion of a support plate of an exemplary electronic device.

Referring to FIGS. 8A, 8B, 8C, 8D, 8E, and 8F, an electronic device 101 may include a display (e.g., the display 230 of FIG. 2A), the support plate 510 supporting the display 230, and the first protection layer (e.g., the first protection layer 520 of FIG. 5B) attached under the support plate 510. In an embodiment, the first protection layer may be coated under the support plate 510. The display 230 may include a first display portion (e.g., the first display portion 231 of FIG. 2A), a second display portion (e.g., the second display portion 232 of FIG. 2A), and a third display portion (e.g., the third display portion 233 of FIG. 2A) extending from the first display portion 231 to the second display portion 232 and is foldable. The support plate 510 may be formed from glass and include a first supporting portion (e.g., the first supporting portion 511 of FIG. 5A) disposed under the first display portion 231, a second supporting portion (e.g., the second supporting portion 512 of FIG. 5A) disposed under the second display portion 232, and a third supporting portion 513 disposed under the third display portion 233 and including a plurality of slits 515. However, an embodiment supported by the present disclosure is not limited thereto, and the electronic device 101 may include the structures and/or the configurations (e.g., the housing 200, the hinge structure 250, the window 310, the one or more adhesive layers 320 and/or the adhesive layers 321, 322, and 323, the reinforcement layer 330, the display panel 340, the support layer 350, the protection member 420, the electromagnetic induction panel 430, the elastic material 530, the transformation portion 233a, the first planar portion 233b, the second planar portion 233b, the slits 710, 720, and 730, and the bridges 740, 750 and 760) exemplarily illustrated and described in FIGS. 4 to 7B. Hereinafter, an overlapping description of configurations having the same reference numerals as described in FIGS. 4 to 7B will be omitted.

The second slits 720 formed in a second bendable portion 702 may have a different pattern from the first slits 710 formed in a first bendable portion 701. The third slits 730 formed in a third bendable portion 703 may have a different pattern from the first slits 710 formed in the first bendable portion 701.

Referring to FIG. 8A, a width of each of the second bridges 750 of the second bendable portion 702 may be greater than a width of each bridge of the first bendable portion 701. A width of each of the third bridges 760 of the third bendable portion 703 may be greater than the width of each bridge of the first bendable portion 701.

For example, widths h0 of the first bridges 740 disposed in the first bendable portion 701 may be substantially the same as each other. A width h1 of the second bridges 750 disposed in the second bendable portion 702 may be greater than the width h0 of the first bridges 740. A width h1 of the third bridges 760 disposed in the third bendable portion 703 may be greater than the width h0 of the first bridges 740. However, an embodiment supported by the present disclosure is not limited thereto.

Referring to FIG. 8B, a width w1 of each of the second slits 720 of the second bendable portion 702 may be less than a width w0 of each of the first slits 710 of the first bendable portion 701. A width w1 of each of the third slits 730 of the third bendable portion 703 may be less than the width w0 of each of the first slits 710 of the first bendable portion 701. However, an embodiment supported by the present disclosure is not limited thereto.

Referring to FIG. 8C, the first bridges 740 of the first bendable portion 701 may include a first set of bridges 741 arranged in a first direction 801 perpendicular to a second direction 802, which is a longitudinal direction of each of the plurality of slits 515. The second bridges 750 of the second bendable portion 702 may include a second set of bridges 750a arranged in a third direction 803 inclined with respect to the second direction 802. The third bridges 760 of the third bendable portion 703 may include a third set of bridges 760a arranged in a fourth direction 804 inclined with respect to the second direction 802. In the present disclosure, a set of bridges may mean bridges arranged in a specified direction by being disposed adjacent to each other or right next to each other. However, an embodiment supported by the present disclosure is not limited thereto.

For example, the first slits 710 formed in the first bendable portion 701 may each have the same shape as each other. A portion of the second slits 720 formed in the second bendable portion 702 may have a length smaller than a length of a slit of the first slits 710. A portion of the third slits 730 formed in the third bendable portion 703 may have a length smaller than the length of the slit of the first slits 710.

For example, the first direction 801 in which the first set of bridges 741 of the first bendable portion 701 are arranged may be a direction perpendicular to the second direction 802, which is the longitudinal direction of the slit of the plurality of slits 515. The second set of bridges 750a of the second bendable portion 702 may be arranged in the third direction 803 inclined with respect to the first direction 801 and the second direction 802. The third set of bridges 760a of the third bendable portion 703 may be arranged in a fourth direction 804 that is tilted with respect to the first direction 801 and the second direction 802 and different from the third direction 803. However, an embodiment supported by the present disclosure is not limited thereto, and for example, the second bridges 750 of the second bendable portion 702 may include a third set of bridges 760a arranged in the fourth direction 804. The third bridges 760 of the third bendable portion 703 may include a fourth set of bridges 760b arranged in the third direction 803. However, an embodiment supported by the present disclosure is not limited thereto, and the slits 720 and 730 formed in the second bendable portion 702 and/or the third bendable portion 703 may reduce damage to the third supporting portion 513 by forming a different pattern from the first slits 710 formed in the first bendable portion 701.

Referring to FIG. 8D, a width of each of the second bridges 750 of the second bendable portion 702 may be greater than a width of each bridge of the first bendable portion 701. The width of each of the third bridges 760 of the third bendable portion 703 may be greater than the width of each bridge of the first bendable portion 701.

For example, the width h0 of the first bridges 740 disposed in the first bendable portion 701 may be substantially the same as each other. A width of the second bridges 750 disposed in the second bendable portion 702 may increase sequentially as they extend from the first bendable portion 701 toward the first supporting portion 511 (e.g., toward the +x direction). For example, the second bridges 750 may include a first bridge 751 having the width h1 greater than the width h0 of the first bridges 740. The second bridges 750 may include a second bridge 752 disposed in a column immediately following the first bridge 751 and having a width h2 greater than the width h1 of the first bridge 751. The second bridges 750 may include a third bridge 753 disposed in a column immediately following the second bridge 752 and having a width h3 greater than the width h2 of the second bridge 752. However, an embodiment supported by the present disclosure is not limited thereto. For example, a width of the third bridges 760 disposed in the third bendable portion 703 may increase sequentially from the first bendable portion 701 toward the second supporting portion 512 (e.g., toward a -x direction). For example, the third bridges 760 may include a fourth bridge 761 having the width h1 greater than the width h0 of the first bridges 740. The third bridges 760 may include a fifth bridge 762 disposed in a column immediately following the fourth bridge 761 and having the width h2 greater than the width h1 of the fourth bridge 761. The third bridges 760 may include a sixth bridge 763 disposed in a column immediately following the fifth bridge 762 and having the width h3 greater than the width h2 of the fifth bridge 762. However, an embodiment supported by the present disclosure is not limited thereto.

Referring to FIG. 8E, a width of each of the second slits 720 of the second bendable portion 702 may be smaller than a width of each of the first slits 710 of the first bendable portion 701. A width of each of the third slits 730 of the third bendable portion 703 may be smaller than the width of each of the first slits 710 of the first bendable portion 701.

For example, the width w0 of the first slits 710 disposed in the first bendable portion 701 may be substantially the same as each other. A width of the second slits 720 disposed in the second bendable portion 702 may be reduced sequentially from the first bendable portion 701 toward the first supporting portion 511 (e.g., toward the +x direction). For example, the second slits 720 may include a first slit 721 having the width w1 less than the width w0 of the first slits 710. The second slits 720 may include a second slit 722 disposed in a column immediately following the first slit 721 and having a width w2 less than the width w1 of the first slit 721. The second slits 720 may include a third slit 723 disposed in a column immediately following the second slit 722 and having a width w3 less than the width w2 of the second slit 722. However, an embodiment supported by the present disclosure is not limited thereto. For example, a width of the third slits 730 disposed in the third bendable portion 703 may be reduced sequentially from the first bendable portion 701 toward the second supporting portion 512 (e.g., toward the -x direction). For example, the third slits 730 may include a fourth slit 731 having the width w1 smaller than the width w0 of the first slits 710. The third slits 730 may include a fifth slit 732 disposed in a column immediately following the fourth slit 731 and having the width w2 less than the width w1 of the fourth slit 731. The third slits 730 may include a sixth slit 733 disposed in a column immediately following the fifth slit 732, and having the width w3 less than the width w2 of the fifth slit 732. However, an embodiment supported by the present disclosure is not limited thereto.

Referring to FIG. 8F, a structure in which structures exemplarily described through FIG. 8D and FIG. 8E are combined may be provided in the third supporting portion 513. For example, the width h0 of the first bridges 740 disposed in the first bendable portion 701 may be substantially the same as each other. The width of the second bridges 750 disposed in the second bendable portion 702 may increase sequentially from the first bendable portion 701 toward the first supporting portion 511 (e.g., toward the +x direction). For example, the second bridges 750 may include the first bridge 751 having the width h1 greater than the width h0 of the first bridges 740. The second bridges 750 may include the second bridge 752 disposed in the column immediately following the first bridge 751 and having the width h2 greater than the width h1 of the first bridge 751. The second bridges 750 may include the third bridge 753 disposed in the column immediately following the second bridge 752 and having the width h3 greater than the width h2 of the second bridge 752. However, an embodiment supported by the present disclosure is not limited thereto. For example, the width of the third bridges 760 disposed in the third bendable portion 703 may increase sequentially from the first bendable portion 701 toward the second supporting portion 512 (e.g., toward the -x direction). For example, the third bridges 760 may include the fourth bridge 761 having the width h1 greater than the width h0 of the first bridges 740. The third bridges 760 may include the fifth bridge 762 disposed in the column immediately following the fourth bridge 761 and having the width h2 greater than the width h1 of the fourth bridge 761. The third bridges 760 may include the sixth bridge 763 disposed in the column immediately following the fifth bridge 762 and having the width h3 greater than the width h2 of the fifth bridge 762. However, an embodiment supported by the present disclosure is not limited thereto.

For example, the width w0 of the first slits 710 disposed in the first bendable portion 701 may be substantially the same as each other. The width of the second slits 720 disposed in the second bendable portion 702 may be reduced sequentially from the first bendable portion 701 toward the first supporting portion 511 (e.g., toward the +x direction). For example, the second slits 720 may include the first slit 721 having the width w1 less than the width w0 of the first slits 710. The second slits 720 may include the second slit 722 disposed in the column immediately following the first slit 721 and having the width w2 less than the width w1 of the first slit 721. The second slits 720 may include the third slit 723 disposed in the column immediately following the second slit 722 and having the width w3 less than the width w2 of the second slit 722. However, an embodiment supported by the present disclosure is not limited thereto. For example, the width of the third slits 730 disposed in the third bendable portion 703 may be reduced sequentially from the first bendable portion 701 toward the second supporting portion 512 (e.g., toward the -x direction). For example, the third slits 730 may include the fourth slit 731 having the width w1 less than the width w0 of the first slits 710. The third slits 730 may include the fifth slit 732 disposed in the column immediately following the fourth slit 731 and having the width w2 less than the width w1 of the fourth slit 731. The third slits 730 may include the sixth slit 733 disposed in the column immediately following the fifth slit 732, and having the width w3 less than the width w2 of the fifth slit 732. However, an embodiment supported by the present disclosure is not limited thereto.

According to the above-described embodiment, as the first bendable portion 701 and the second and third bendable portions 702 and 703 have patterns different from each other, the support plate 510 of the electronic device 101 may reduce damage to the third supporting portion 513 of the support plate 510.

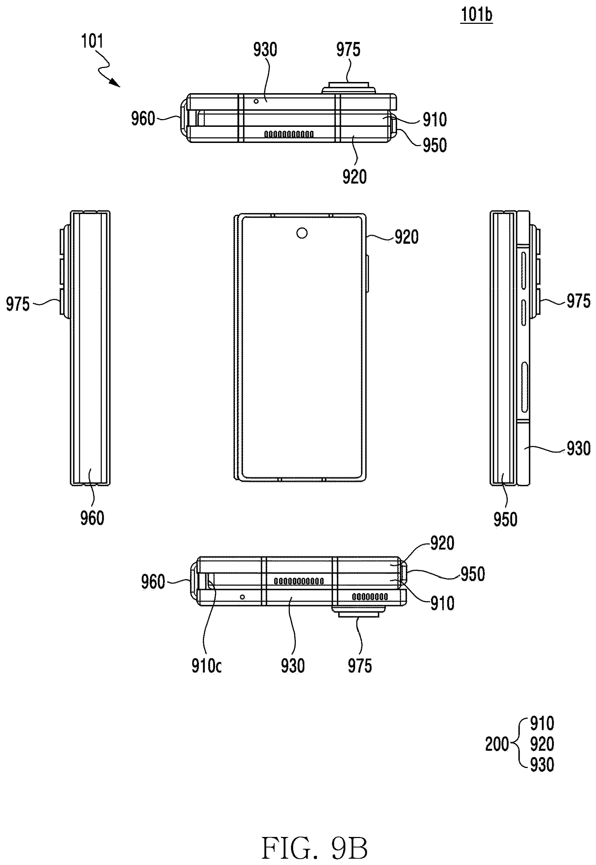

FIG. 9A illustrates an exemplary electronic device in a first state. FIG. 9B illustrates an exemplary electronic device in a second state.

Referring to FIGS. 9A and 9B, an electronic device 101 may include a housing 200, a flexible display 940, a first hinge assembly 950, and a second hinge assembly 960. The housing 200 may include a first housing part 910, a second housing part 920, and a third housing part 930. The housing 200 includes multiple housing parts 910, 920, and 930, and may be referred to as a multi-foldable housing in terms of being foldable multiple times. The electronic device 101 may be referred to as a multi-foldable electronic device, in terms of including the housing 200 and/or the flexible display 940 that may be folded multiple times. However, an embodiment is not limited thereto.

The first housing part 910 may be rotatably coupled to the second housing part 920 by the first hinge assembly 950. The second housing part 920 and the first housing part 910 may be rotated with respect to the first hinge assembly 950. While the first housing part 910 is rotated with respect to the first hinge assembly 950, the second housing part 920 may be rotated with respect to the first hinge assembly 950. For example, when the second housing part 920 and the first housing part 910 are rotated with respect to the first hinge assembly 950, an angular displacement of the second housing part 920 may be substantially the same as an angular displacement of the first housing part 910.

The third housing part 930 may be rotatably coupled to the second housing part 920 by the second hinge assembly 960. The second housing part 920 and the third housing part 930 may be rotated with respect to the second hinge assembly 960. While the second housing part 920 is rotated with respect to the second hinge assembly 960, the third housing part 930 may be rotated with respect to the second hinge assembly 960. For example, when the second housing part 920 and the third housing part 930 rotate with respect to the second hinge assembly 960, the angular displacement (or an angular change) of the second housing part 920 may be substantially the same as an angular displacement of the third housing part 930.

The first hinge assembly 950 and the second hinge assembly 960 may change a state of the electronic device. The first hinge assembly 950 and the second hinge assembly 960 may provide (or enable) a first state 101a of the electronic device 101 (or the first state 101a of the housing 200). The first state 101a of the electronic device 101 (or the first state 101a of the housing 200) may be described as an unfolded state of the electronic device 101 (or the housing 200). In the first state 101a, a front surface of the first housing part 910, a front surface of the second housing part 920, and a front surface of the third housing part 930 may define a front surface of the electronic device 101. In the first state 101a, the front surface of the first housing part 910, the front surface of the second housing part 920, and the front surface of the third housing part 930 may face substantially the same direction. In the first state 101a, the electronic device 101 may provide a large display area of the flexible display 940 to a user.

The first hinge assembly 950 and the second hinge assembly 960 may provide a second state 101b of the electronic device 101 (or the second state 101b of the housing 200). The second state 101b of the electronic device 101 (or the second state 101b of the housing 200) may be described as a multiple folded state of the electronic device 101 (or the housing 200). In the second state 101b, the front surface of the first housing part 910 and the front surface of the second housing part 920 may face opposite directions, and the front surface of the second housing part 920 and the front surface of the third housing part 930 may face opposite directions. In the second state 101b, the front surface of the first housing part 910 and the front surface of the third housing part 930 may face the same direction. For example, in the second state 101b, the front surface of the second housing part 920 may face the front surface of the first housing part 910, and the front surface of the third housing part 930 may face a rear surface of the first housing part 910. In the second state 101b, the electronic device 101 may be folded to improve portability.

The first hinge assembly 950 and the second hinge assembly 960 may provide a third state of the electronic device 101. The third state of the electronic device 101 may be described as a state in which the electronic device 101 is partially folded and partially unfolded (or a single folded state or a half folded state). For example, in the third state, the front surface of the second housing part 920 and the front surface of the third housing part 930 may face the same direction, and the front surface of the first housing part 910 and the front surface of the second housing part 920 may face opposite directions. For example, in the third state, the first housing part 910 and the second housing part 920 may be folded, and the second housing part 920 and the third housing part 930 may be unfolded.

The flexible display 940 may at least partially define an exterior of the electronic device 101. The flexible display 940 may be partially disposed in the housing 200. The flexible display 940 may define a front surface of the electronic device 101. The flexible display 940 may include a first planar portion 941, a second planar portion 942, a third planar portion 943, a first foldable portion 944, and a second foldable portion 945. The first planar portion 941 of the flexible display 940 may be disposed on the front surface of the first housing part 910. The second planar portion 942 of the flexible display 940 may be disposed on the front surface of the second housing part 920. The third planar portion 943 of the flexible display 940 may be disposed on the front surface of the third housing part 930. The first foldable portion 944 of the flexible display 940 may be disposed between the first planar portion 941 and the second planar portion 942 of the flexible display 940. For example, the first foldable portion 944 of the flexible display 940 may be disposed on the first hinge assembly 950 connecting the first housing part 910 and the second housing part 920. The second foldable portion 945 of the flexible display 940 may be disposed between the second planar portion 942 and the third planar portion 943 of the flexible display 940. For example, the second foldable portion 945 of the flexible display 940 may be disposed on the second hinge assembly 960 connecting the second housing part 920 and the third housing part 930.

In the first state 101a, an entire display area of the flexible display 940 may be viewed from a front surface of the housing 200. For example, the first planar portion 941, the second planar portion 942, the third planar portion 943, the first foldable portion 944, and the second foldable portion 945 of the flexible display 940 may be visually exposed. The electronic device 101 may provide a large display area including the first planar portion 941, the second planar portion 942, the third planar portion 943, the first foldable portion 944, and the second foldable portion 945 to the user. A display area of the flexible display 940 may not be visible in the second state 101b. For example, the first planar portion 941, the second planar portion 942, the third planar portion 943, the first foldable portion 944, and the second foldable portion 945 of the flexible display 940 may not be visually exposed. In the third state, the display area of the flexible display 940 may be partially visible from the front surface of the third housing part 930. For example, the third planar portion 943 may be visually exposed, and the first planar portion 941 and the second planar portion 942 may not be visually exposed.

As a non-limiting example, when the flexible display 940 is used to display a screen in the first state 101a of the electronic device 101, all of the portions 941, 942, 943, 944, and 945 of the flexible display 940 may be activated. As a non-limiting example, in the second state 101b, all of the portions 941, 942, 943, 944, and 945 of the flexible display 940 may be deactivated. As a non-limiting example, in the third state of the electronic device 101, when the flexible display 940 is used to display the screen, the third planar portion 943 may be activated and the other portions 941, 942, 944, and 945 of the flexible display 940 may be deactivated.

The first hinge assembly 950 and the second hinge assembly 960 may face substantially the same direction as the first planar portion 941 of the flexible display 940, the second planar portion 942 of the flexible display 940, and the third planar portion 943 of the flexible display 940. In the first state 101a, the first foldable portion 944 and the second foldable portion 945 may be disposed on substantially the same horizontal plane as the first planar portion 941, the second planar portion 942, and the third planar portion 943.

The first hinge assembly 950 and the second hinge assembly 960 may provide the second state 101b of the electronic device 101. In the second state 101b, the second planar portion 942 of the flexible display 940 may face the first planar portion 941 of the flexible display 940, and the third planar portion 943 of the flexible display 940 may face the rear surface of the first housing part 910. In the second state 101b, the first foldable portion 944 of the flexible display 940 may be folded so that the first planar portion 941 of the flexible display 940 and the second planar portion 942 of the flexible display 940 face different directions. In the second state 101b, the second foldable portion 945 of the flexible display 940 may be folded so that the second planar portion 942 of the flexible display 940 and the third planar portion 943 of the flexible display 940 face different directions.

In the second state 101b, the first housing part 910 may be disposed between the second housing part 920 and the third housing part 930. In the second state 101b, the second foldable portion 945 of the flexible display 940 disposed on the second hinge assembly 960 may partially face a side surface 910c of the first housing part 910. For example, in order to provide visual information to the user in the second state 101b, a sub-display may be additionally disposed on a rear surface of the second housing part 920. However, an embodiment supported by the present disclosure is not limited thereto.

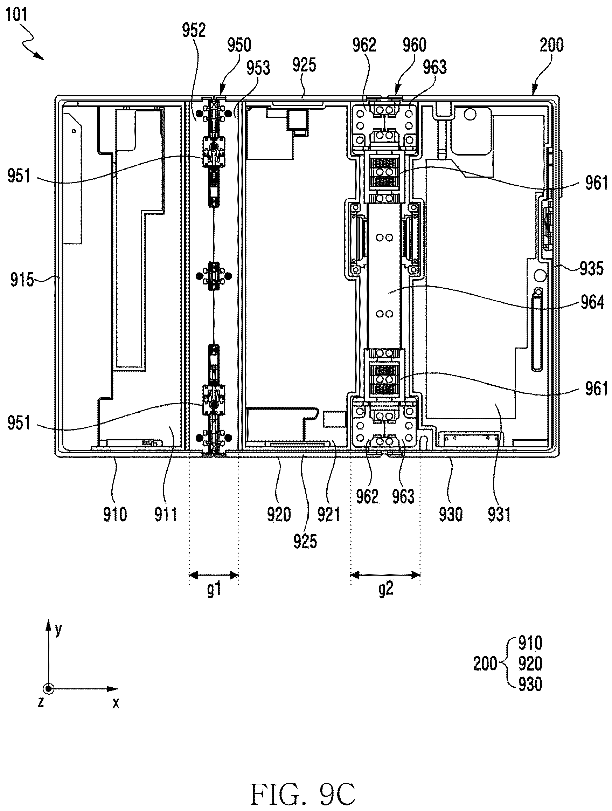

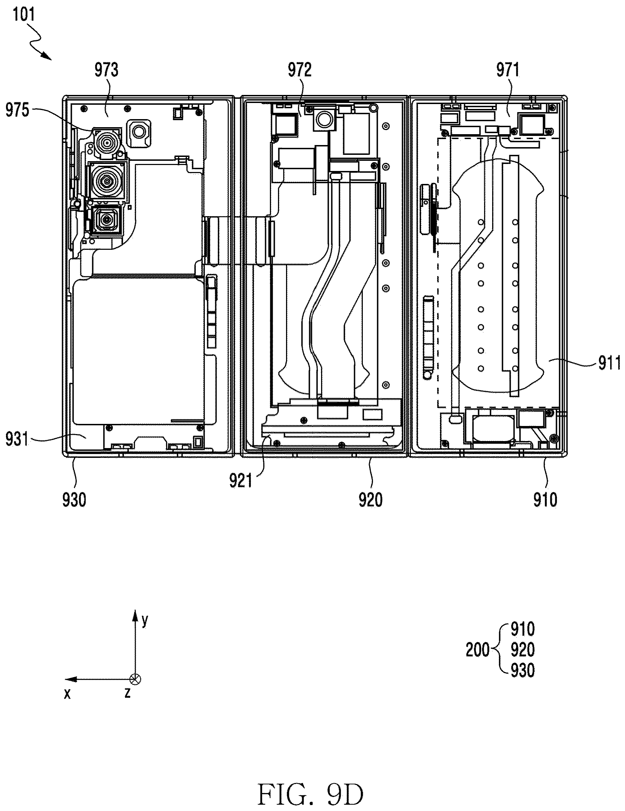

FIG. 9C is a top plan view of an exemplary electronic device in a first state from which a flexible display is removed. FIG. 9D is a rear view of an exemplary electronic device in a first state from which a rear cover is removed.

Referring to FIGS. 9C and 9D, the electronic device 101 may include the first hinge assembly 950 and the second hinge assembly 960. A first width g1 of the first hinge assembly 950 may be narrower than a second width g2 of the second hinge assembly 960. A difference between the first width g1 of the first hinge assembly 950 and the second width g2 of the second hinge assembly 960 may be equal to or greater than a thickness of the first housing part 910. For example, the second hinge assembly 960 may have the second width g2 wider than the first width g1 so that the first housing part 910 is disposed between the second housing part 920 and the third housing part 930 according to the second state 101b. The first hinge assembly 950 may be referred to as a narrow hinge structure in terms of having a narrower width than the second hinge assembly 960. The second hinge assembly 960 may be referred to as a wide hinge structure in terms of having a wider width than the first hinge assembly 950.

The first hinge assembly 950 may include a first set 951 of gears, a first hinge plate 952, and a second hinge plate 953. The first hinge plate 952 may be coupled to a first supporting portion 911 of the first housing part 910. The second hinge plate 953 may be coupled to a second supporting portion 921 of the second housing part 920. Gears included in the first set 951 of gears may be configured to rotate the first hinge plate 952 and the second hinge plate 953. For example, the gears included in the first set 951 of gears may rotate the second hinge plate 953 (or the second housing part 920) in conjunction with rotation of the first hinge plate 952 (or the first housing part 910). After the first hinge plate 952 (or the first housing part 910) is rotated, the gears included in the first set 951 of gears may be rotated according to the rotation of the first hinge plate 952 (or the first housing part 910). The second hinge plate 953 (or the second housing part 920) may be rotated in conjunction with the rotation of the first hinge plate 952 according to rotation of the gears included in the first set 951 of gears.

The second hinge assembly 960 may include a second set 961 of gears, a third hinge plate 962, a fourth hinge plate 963, and a support plate 964. The third hinge plate 962 may be coupled to the second supporting portion 921 of the second housing part 920. The fourth hinge plate 963 may be coupled to a third supporting portion 931 of the third housing part 930. Gears included in the second set 961 of gears may be configured to rotate the third hinge plate 962 and the fourth hinge plate 963. For example, the gears included in the second set 961 of gears may rotate the fourth hinge plate 963 (or the third housing part 930) in conjunction with rotation of the third hinge plate 962 (or the second housing part 920). After the third hinge plate 962 (or the second housing part 920) is rotated, the gears included in the second set 961 of gears may be rotated according to the rotation of the third hinge plate 962 (or the second housing part 920). The fourth hinge plate 963 (or the third housing part 930) may be rotated in conjunction with the rotation of the third hinge plate 962 according to rotation of the gears included in the second set 961 of gears.

The electronic device 101 may include a first printed circuit board 971, a second printed circuit board 972, and a third printed circuit board 973. Various hardware components may be mounted on each of the printed circuit boards 971, 972, and 973.

The first printed circuit board 971 may be disposed in the first supporting portion 911 of the first housing part 910. A hardware component in the first housing part 910 may be disposed in the first printed circuit board 971. The second printed circuit board 972 may be disposed on the second supporting portion 921 of the second housing part 920. A hardware component in the second housing part 920 may be disposed in the second printed circuit board 972. The third printed circuit board 973 may be disposed in the third supporting portion 931 of the third housing part 930. A hardware component (e.g., a rear camera 975) in the third housing part 930 may be disposed in the third printed circuit board 973.

The hardware component disposed in the first printed circuit board 971 may support the hardware component disposed in the second printed circuit board 972 and/or the hardware component disposed in the third printed circuit board 973 or may operate independently.

The hardware component disposed in the second printed circuit board 972 may support the hardware component disposed in the first printed circuit board 971 or the hardware component disposed in the third printed circuit board 973 or may operate independently. The hardware component disposed in the second printed circuit board 972 may include a speaker, a front camera and/or display driving circuitry.

The hardware component disposed in the third printed circuit board 973 may include at least one processor including processing circuitry, memory including one or more storage mediums, communication circuitry, and a rear camera 975. The rear camera 975 may be exposed through a structure (e.g., an opening) of a rear surface of the third housing part 930.

The electronic device 101 may further include batteries. Each of the batteries may be attached to the supporting portions 911, 921, and 931 included in the housing parts 910, 920, and 930. The supporting portions 911, 921, and 931 may support rechargeable batteries.

The housing 200 may include frames 915, 925, and 935. For example, the frames 915, 925, and 935 may form a periphery of the electronic device 101 in the first state 101a. For example, the first housing part 910 may include the first frame 915 at least partially surrounding the first supporting portion 911. The second housing part 920 may include the second frame 925 at least partially surrounding the second supporting portion 912. The third housing part 930 may include the third frame 935 at least partially surrounding the third supporting portion 913. The second frame 925 may be positioned between the first frame 915 and the third frame 935 in the first state 101a of the electronic device 101. The frames 915, 925, and 935 may be referred to as a peripheral portion and/or a deco of the housing 200 in terms of being disposed along the periphery of the electronic device 101 to protect a periphery of the flexible display 940, but an embodiment supported by the present disclosure is not limited thereto.

The first housing part 910 and the third housing part 930 are illustrated to rotate in an opposite direction with respect to the second housing part 920, but are not limited thereto. For example, while changing from the first state 101a to the second state 101b, the first housing part 910 may rotate counterclockwise with respect to the second housing part 920, and the third housing part 930 may rotate counterclockwise with respect to the second housing part 920. As the first housing part 910 and the third housing part 930 rotate in the same direction, a portion of the display area of the flexible display 940 may be visually exposed in the second state. However, an embodiment supported by the present disclosure is not limited thereto, and for example, while changing from the first state 101a to the second state 101b, the first housing part 910 may rotate clockwise with respect to the second housing part 920, and the third housing part 930 may rotate counterclockwise with respect to the second housing part 920. The electronic device 101 exemplarily illustrated and described in FIGS. 9A to 9D, supported by the present disclosure, may have various form-factors according to a rotational direction of the first housing part 910 and/or the third housing part 930 with respect to the second housing part 920.

The electronic device 101 exemplarily illustrated and described in FIGS. 9A to 9D may include the support plate 510 exemplarily illustrated and described in FIGS. 8A to 8F. Since the electronic device 101 includes the two hinge assemblies 950 and 960 configured to transform the display 940, the support plate 510 may include sections in which a plurality of slits 515 formed at a position corresponding to each of the hinge assemblies 950 and 960 are formed. A shape of the plurality of slits 515 formed in the sections may vary, for example, according to the widths g1 and g2 of each of the hinge assemblies 950 and 960.

For example, the plurality of slits 515 formed in a portion corresponding to the first hinge assembly 950 having the relatively small width g1 of the support plate 510 may have a different shape from a shape of the plurality of slits 515 formed in a portion corresponding to the second hinge assembly 960 having the width g2 greater than the width g1. For example, a width of each of the plurality of slits 515 formed in the portion corresponding to the first hinge assembly 950 of the support plate 510 may be greater than a width of each of the plurality of slits 515 formed in the portion corresponding to the second hinge assembly 960. For example, a width and/or a length of each of a plurality of bridges 516 of a portion corresponding to the first hinge assembly 950 of the support plate 510 may be smaller than a width and/or a length of each of the plurality of bridges 516 of a portion corresponding to the second hinge assembly 960. However, an embodiment supported by the present disclosure is not limited thereto, and according to a function of each of the hinge assemblies 950 and 960, patterns of the plurality of slits 515 formed in portions of the support plate 510 corresponding to each of the hinge assemblies 950 and 960 may be different from each other.

The technical problems to be achieved in the present disclosure are not limited to those described above, and other technical problems not mentioned herein will be clearly understood by those having ordinary knowledge in the art to which the present disclosure belongs.

As described above, a foldable electronic device (e.g., the electronic device 101 of FIG. 1) may comprise a flexible display including a first display portion (e.g., the first display portion 231 of FIG. 2A), a second display portion (e.g., the second display portion 232 of FIG. 2A), and a third display portion (e.g., the third display portion 233 of FIG. 2A) extending from the first display portion to the second display portion, which is foldable. The foldable electronic device may comprise a support plate (e.g., the support plate 510 of FIG. 5A), formed from glass, supporting the flexible display, and including a first supporting portion (e.g., the first supporting portion 511 of FIG. 5A) disposed under the first display portion, a second supporting portion (e.g., the second supporting portion 512 of FIG. 5A) disposed under the second display portion, and a third supporting portion (e.g., the third supporting portion 513 of FIG. 5A) disposed under the third display portion and including a plurality of slits (e.g., the plurality of slits 515 of FIG. 5A). The foldable electronic device may comprise the protection layer (e.g., the first protection layer 510 of FIG. 5B) attached under the support plate. In an embodiment, the protection layer may be coated under the support plate.

For example, a distance (e.g., the d1 of FIG. 5B) between a first surface (e.g., the first surface 510a of FIG. 5A) of the support plate facing toward the flexible display and a neutral plane (e.g., the neutral plane N of FIG. 5B) of the support plate may be greater than a distance (e.g., the d2 of FIG. 5B) between a second surface (e.g., the second surface 510b of FIG. 5A) of the support plate opposite to the first surface and the neutral plane of the support plate.

For example, in a folded state of the electronic device, the support plate may further include a first portion (e.g., the first portion 501 of FIG. 5A) to which compressive stress is exerted and a second portion (e.g., the second portion 502 of FIG. 5A), formed integrally with the first portion, to which tensile stress is exerted. A thickness (e.g., the d1 of FIG. 5B) of the first portion may be greater than a thickness (e.g., the d2 of FIG. 5B) of the second portion.

For example, a thickness (e.g., the d of FIG. 5A) of the support plate may be within a range of 30µm to 150µm. More preferably, the thickness of the support plate may be within a range of 50 µm to 130µm. More preferably, the thickness of the support plate may be within a range of 70 µm to 110µm. The present invention is not limited to the ranges. For instance, the thickness of the support plate may also be arranged to be less than 30µm or more than 150µm.

For example, a modulus of the support plate may be within a range of 60GPa to 80GPa. More preferably, the modulus of the support plate may be within a range of 65GPa to 75GPa. The present invention is not limited to the ranges. For instance, the modulus of the support plate may also be arranged to be less than 60GPa or more than 80GPa.

For example, the protection layer may include a first protecting portion (e.g., the first protecting portion 521 of FIG. 6A) attached under the first supporting portion, a second protecting portion (e.g., the second protecting portion 612 of FIG. 6A) attached under the second supporting portion, and a third protecting portion (e.g., the third protecting portion 613 of FIG. 6A) attached under the third supporting portion.

For example, a modulus of the third protecting portion may be smaller than a modulus of the first protecting portion and a modulus of the second protecting portion.

For example, the foldable electronic device may comprise an elastic material (e.g., the elastic material 530 of FIG. 5B), extending from the third protecting portion, filling the plurality of slits of the third supporting portion.

For example, the foldable electronic device may further comprise another protection layer (e.g., the second protection layer 610 of FIG. 6B) attached on the support plate. In an embodiment, the another protection layer may be coated on the support plate. A thickness (e.g., the t1 of FIG. 6B) of the protection layer may be greater than a thickness (e.g., the t2 of FIG. 6B) of the another protection layer.

For example, the protection layer may include at least one of shatterproof film and shatterproof coating.

For example, the protection layer may include at least one of acryl, silicone, and resin.

For example, the third supporting portion of the support plate may include a first bendable portion (e.g., the first bendable portion 701 of FIG. 8B), a second bendable portion (e.g., the second bendable portion 702 of FIG. 8B) disposed between the first bendable portion and the first supporting portion, a third bendable portion (e.g., the third bendable portion 703 of FIG. 8B) disposed between the first bendable portion and the second supporting portion, and a plurality of bridges (e.g., the plurality of bridges 516 of FIG. 8B), forming ends of the plurality of slits, spacing the plurality of slits apart from each other. The plurality of slits may include first slits (e.g., the first slits 710 of FIG. 7B) formed on the first bendable portion, second slits (e.g., the second slits 720 of FIG. 7B), formed on the second bendable portion, having a different pattern from the first slits, and third slits (e.g., the third slits 730 of FIG. 7B), formed on the third bendable portion, having a different pattern from the first slits.

For example, the plurality of bridges may include first bridges (e.g., the first bridges 740 of FIG. 7B) spacing the first slits in the first bendable portion apart from each other, second bridges (e.g., the second bridges 750 of FIG. 7B) spacing the second slits in the second bendable portion apart from each other, and third bridges (e.g., the third bridges 760 of FIG. 7B) spacing the third slits in the third bendable portion apart from each other. A width of each of the second bridges may be greater than a width of each of the first bridges. A width of each of the third bridges may be greater than the width of each of the first bridges.

For example, the plurality of bridges may include a first set of bridges (e.g., the first set of bridges 741 of FIG. 8A), disposed in the first bendable portion, arranged in a first direction (e.g., the first direction 801 of FIG. 8A) perpendicular to a longitudinal direction (e.g., the second direction 802 of FIG. 8A) of each of the plurality of slits, a second set of bridges (e.g., the second set of bridges 750a of FIG. 8A), disposed in the second bendable portion, arranged in a second direction (e.g., the third direction 803 of FIG. 8A) tilted with respect to the first direction, and a third set of bridges (e.g., the third set of bridges 760a of FIG. 8A), disposed in the third bendable portion, arranged in a third direction (e.g., the fourth direction 804 of FIG. 8A) tilted with respect to the first direction.

For example, a width of each of the second slits may be smaller than a width of each of the first slits. A width of each of the third slits may be smaller than the width of each of the first slits.

As described above, a foldable electronic device may comprise a housing including a first housing part and a second housing part. The foldable electronic device may comprise a hinge assembly that rotatably couples the first housing part and the second housing part. The foldable electronic device may comprise a flexible display including a first display portion coupled to the first housing part, a second display portion coupled to the second housing part, and a third display portion extending from the first display portion to the second display portion and foldable by the hinge assembly. The foldable electronic device may comprise a support plate, formed from glass, supporting the flexible display, and including a first supporting portion disposed under the first display portion, a second supporting portion disposed under the second display portion, and a third supporting portion disposed under the third display portion and including a plurality of slits. The foldable electronic device may comprise a protection layer attached under the support plate. In an embodiment, the protection layer may be coated under the support plate. A neutral plane of the support plate may be disposed adjacent to a second surface among a first surface facing toward the flexible display and the second surface opposite to the first surface.

For example, a thickness of the support plate may be within a range of 30µm to 150µm.

For example, the protection layer may include a first protecting portion attached under the first supporting portion, a second protecting portion attached under the second supporting portion and having a modulus greater than the first protecting portion, and a third protecting portion attached under the third supporting portion and having a modulus greater than the first protecting portion.

For example, the foldable electronic device may further comprise another protection layer attached on the support plate. In an embodiment, the another protection layer may be coated on the support plate. A thickness of the protection layer may be greater than a thickness of the another protection layer.

For example, the third supporting portion of the support plate may include a first bendable portion, a second bendable portion disposed between the first bendable portion and the first supporting portion, a third bendable portion disposed between the first bendable portion and the second supporting portion. The plurality of slits may include first slits formed on the first bendable portion, second slits, formed on the second bendable portion, having a different pattern from the first slits, and third slits, formed on the third bendable portion, having a different pattern from the first slits.

The effects that may be obtained from the present disclosure are not limited to those described above, and any other effects not mentioned herein will be clearly understood by those having ordinary knowledge in the art to which the present disclosure belongs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (101) comprising:
a flexible display (230) including a first display portion (231), a second display portion (232), and a third display portion (233) extending from the first display portion (231) to the second display portion (232), which is foldable;
a support plate (510), formed from glass, supporting the flexible display (230), the support plate (510) including a first supporting portion (511) disposed under the first display portion (231), a second supporting portion (512) disposed under the second display portion (232), and a third supporting portion (513) disposed under the third display portion (233) and including a plurality of slits (515); and
a protection layer (520) attached under the support plate (510).

2. The foldable electronic device (101) of claim 1,
wherein the protection layer (520) is coated under the support plate (510), wherein a distance (d1) between a first surface (510a) of the support plate (510) facing toward the flexible display (230) and a neutral plane (N) of the support plate (510) is greater than a distance (d2) between a second surface (510b) of the support plate (510) opposite to the first surface (510a) and the neutral plane (N) of the support plate (510), and wherein the neutral plane (N) of the support plate (510) is a plane in which tensile stress and compressive stress exerted to the support plate (510) are balanced while a state of the electronic device (101) is changed.

3. The foldable electronic device (101) of claim 1 or 2,
wherein, in a folded state of the foldable electronic device (101), the support plate (510) further includes:
a first portion (501) to which compressive stress is exerted; and
a second portion (502), formed integrally with the first portion (501), to which tensile stress is exerted,
wherein a thickness (d1) of the first portion (501) is greater than a thickness (d2) of the second portion (502).

4. The foldable electronic device (101) of any of claims 1-3,
wherein a thickness (d) of the support plate (510) is within a range of 30µm to 150µm.

5. The foldable electronic device (101) of any of claims 1-4,
wherein a modulus of the support plate (510) is within a range of 60GPa to 80GPa.

6. The foldable electronic device (101) of any of claims 1-5,
wherein the protection layer (520) includes:
a first protecting portion (521) attached under the first supporting portion (511);
a second protecting portion (522) attached under the second supporting portion (512); and
a third protecting portion (523) attached under the third supporting portion (513).

7. The foldable electronic device (101) of claim 6,
wherein a modulus of the third protecting portion (523) is smaller than a modulus of the first protecting portion (521) and a modulus of the second protecting portion (522).

8. The foldable electronic device (101) of claim 6 further comprising:
an elastic material (530), extending from the third protecting portion (523), filling the plurality of slits (515) of the third supporting portion (513).

9. The foldable electronic device (101) of any of claims 1-8 further comprising:
another protection layer (610) attached on the support plate (510),
wherein a thickness (t1) of the protection layer (520) is greater than a thickness (t2) of the another protection layer (610).

10. The foldable electronic device (101) of any of claims 1-9,
wherein the protection layer (520) includes at least one of shatterproof film and shatterproof coating.

11. The foldable electronic device (101) of any of claims 1-10,
wherein the protection layer (520) includes at least one of acryl, silicone, and resin.

12. The foldable electronic device (101) of any of claims 1-11,
wherein the third supporting portion (513) of the support plate (510) includes:
a first bendable portion (701);
a second bendable portion (702) disposed between the first bendable portion (701) and the first supporting portion (511);
a third bendable portion (703) disposed between the first bendable portion (701) and the second supporting portion (512); and
a plurality of bridges (516), forming ends of the plurality of slits (515), spacing the plurality of slits (515) apart from each other, and
wherein the plurality of slits (515) include:
first slits (710) formed on the first bendable portion (701);
second slits (720), formed on the second bendable portion (702), having a different pattern from the first slits (710); and
third slits (730), formed on the third bendable portion (703), having a different pattern from the first slits (710).

13. The foldable electronic device (101) of claim 12,
wherein the plurality of bridges (516) include:
first bridges (740) spacing the first slits (710) in the first bendable portion (701) apart from each other;
second bridges (750) spacing the second slits (720) in the second bendable portion (702) apart from each other; and
third bridges (760) spacing the third slits (730) in the third bendable portion (703) apart from each other,
wherein a width of each of the second bridges (750) is greater than a width of each of the first bridges (740), and
wherein a width of each of the third bridges (760) is greater than the width of each of the first bridges (740).

14. The foldable electronic device (101) of claim 12,
wherein the plurality of bridges (516) include:
a first set of bridges (741), disposed in the first bendable portion (701), arranged in a first direction perpendicular to a longitudinal direction of each of the plurality of slits (515);
a second set of bridges (750a), disposed in the second bendable portion (702), arranged in a second direction tilted with respect to the first direction; and
a third set of bridges (760a), disposed in the third bendable portion (703), arranged in a third direction tilted with respect to the first direction.

15. The foldable electronic device (101) of claim 12,
wherein a width of each of the second slits (720) is smaller than a width of each of the first slits (710), and
wherein a width of each of the third slits (730) is smaller than the width of each of the first slits (710).
